# NEUE EUROPÄISCHE PATENTSCHRIFT

(11) **EP 2 218 739 B2**
(45) Veröffentlichungstag und Bekanntmachung des Hinweises auf die Entscheidung über den Einspruch: **22.04.2020**
(45) Hinweis auf die Patenterteilung: 05.09.2012
(21) Anmeldenummer: 10001017.2
(22) Anmeldetag: 02.02.2010
(51) Int. Cl.: C08G 18/08, C08G 18/42, C08G 18/67, C09D 175/16

(54) **Wässrige Beschichtungssysteme auf Basis physikalischer trockener Urethanacrylate**
Aqueous coating systems on the basis of physically dry urethane acrylates
Systèmes de revêtement aqueux à base d'acrylate d'uréthane physique sec

(30) Priorität: 13.02.2009 DE 102009008949
(43) Veröffentlichungstag der Anmeldung: 18.08.2010
(73) Patentinhaber: Covestro Deutschland AG, 51373 Leverkusen (DE)
(72) Erfinder: Sommer, Stefan, Dr., 51375 Leverkusen (DE); Blum, Harald, Dr., 97840 Hafenlohr (DE); Lippemeier, Jürgen, 51147 Köln (DE)
(74) Vertreter: Levpat

(56) Entgegenhaltungen:
- EP-A1- 1 070 732
- WO-A1-02/12407
- DE-A1-102007 038 085

## Beschreibung

Die vorliegende Erfindung beschreibt strahlungshärtbare Beschichtungssysteme auf Basis wässriger Polyurethandispersionen, ein Verfahren zu deren Herstellung, die Verwendung der Beschichtungssysteme als Lacke und / oder Klebstoffe sowie Gegenstände und Substrate, versehen mit diesen Lacken und / oder Klebstoffen.

Strahlungshärtbare, wässrige Beschichtungssysteme auf Basis von Polyurethanpolymeren finden Anwendung in der Beschichtung unter anderem von Holz, Kunststoffen und Leder und zeichnen sich durch eine Vielzahl positiver Eigenschaften, wie guter Chemikalienbeständigkeit und mechanische Stabilität, aus. Ein besonderer Vorteil ist die sekundenschnelle Aushärtung der Polyurethandeckschicht durch Quervernetzung der im Polymer enthaltenen ethylenischen Doppelbindungen mit Hilfe energiereicher Strahlung.

Für viele Anwendungen, wie z. B. bei der Holz-/Möbel- oder der Kunststofflackierung, spielt eine starke physikalische Antrocknung nach dem Ablüften des Wassers und vor der Strahlenhärtung eine außerordentlich wichtige Rolle. So können Beschichtungen, die nach Ablüften des Wassers griff- und blockfest und noch nicht strahlengehärtet sind, bereits geschliffen, gestapelt und in vielfältiger Weise mechanisch belastet werden.

Für pigmentierte Lacke ergibt sich ein weiterer, bedeutender Vorteil, wenn die Beschichtungen auch im nicht strahlengehärteten Zustand bereits griff- und blockfest sind. Pigmente, wie z. B. Titandioxid, streuen und absorbieren UV-Strahlung und können bei hohem Pigmentgehalt dafür sorgen, dass die strahlungsinduzierte Polymerisation in tieferen Lackschichten unvollständig verläuft. Bei Systemen, die vor Strahlungshärtung noch klebrig sind, führt dies dazu, dass sich nach Strahlenhärtung eine weiche bzw. noch zähflüssige Schicht unter der gehärteten, oberen Schicht befindet. Eine schlechte Haftung zum Substrat und schlechte Beständigkeiten gegenüber Chemikalien und färbende Agenzien sind die Folge. Ist die untere Schicht eines Pigmentlackes trotz ungenügender Strahlenhärtung per se fest und nicht klebrig, werden sowohl Haftung als auch Beständigkeiten besser.

Die Anforderungen an moderne Beschichtungssysteme sind sehr vielfältig. So ist es nicht nur von Vorteil, wenn strahlenhärtbare Beschichtungssysteme nach physikalischer Trocknung block- und grifffest sind, vielmehr sollte nach Strahlenhärtung ein Film erhalten werden, der sich durch hohe chemische Beständigkeiten und gute mechanische Belastbarkeit auszeichnet.

In EP-A 753531 werden Urethanacrylat-Dispersionen auf Basis hydroxylgruppenhaltiger Polyester- und Polyepoxyacrylate beschrieben. Die hier beschriebenen Filme sind zwar physikalisch trocknend, die physikalische Antrocknung sollte jedoch für viele Anwendungen noch stärker sein. Zudem zeigen die Filme nach Strahlenhärtung Schwächen gegen Lösungsmittel.

Wässrige, strahlungshärtbare Polyurethandispersionen auf der Basis hydroxylgruppenhaltiger Polyester- und Polyetheracrylate finden sich in EP-A 872502. Die Beschichtungssysteme führen zu physikalisch trocknenden Filmen, die nach Strahlenhärtung eine ungenügende Pendelhärte aufweisen. Die Beständigkeiten gegen Lösungsmittel sind ebenfalls ungenügend.

In EP-A 942022 werden Urethanacrylat-Dispersionen auf Basis hydroxylgruppenhaltiger Polyester-, Polyether- oder Polyurethanacrylate in Kombination mit Polyepoxyacrylaten beschrieben. Die beschriebenen Beschichtungssysteme führen zu physikalisch trocknenden Klarlacken. Insbesondere in Formulierungen mit hoher Pigmentbeladung reichen die Beständigkeiten gegen färbende Agenzien und Lösungsmitteln nicht aus.

In allen drei angeführten Patenten werden unter anderem Polyesterpolyole verwendet. Diese werden bevorzugt als flexibilisierende Aufbaukomponenten benutzt, indem man die Polyester aus langkettigen und aliphatischen Polyolen und / oder Disäuren aufbaut. Solche flexibilisierenden Polyesterpolyole führen als Bausteine in einer strahlungshärtbaren Polyurethandispersion zu einer geringen physikalischen Trocknung und zu ungenügenden Beständigkeiten gegen färbende Agenzien und Lösungsmittel, insbesondere in pigmentierten Formulierungen.

Das Dokument EP1070732 A1 bezieht sich auf wässrige Dispersionen einer Mischung eines Polyurethans mit einem strahlungshärtbaren (Meth)acrylat-Präpolymer. Das Beispiel 1 von EP1070732 A1 beschreibt die Herstellung dieser UV-härtbaren, wässrigen Dispersion: Es werden ein Polyesterdiol aus Adipinsäure und Isophthalsäure sowie Hexandiol-1,6, Dimethylol-Propionsäure, Ethylenglykol und Toluylendiisocyanat bei 80°C in Methylethylketon umgesetzt. Dann werden Laromer TM LR 8982 (niedrigviskoses modifiziertes Polyetherol-Acrylat mit einer Hydroxyzahl von 70 mg KOH/g) und sogleich danach Wasser zugegeben. Es wird eine UV-härtbare, wässrige Polyurethandispersion erhalten.

Aufgabe war es, strahlungshärtbare Beschichtungssysteme bereitzustellen, die eine schnelle physikalische Trocknung ermöglichen, nach Trocknung sehr blockfest sind und nach Strahlenhärtung sehr harte und chemikalienbeständige Filme ermöglichen. Die Filme sollen aber nicht spröde und noch ausreichend flexibel sein. Dies soll für Klar- und pigmentierte Lacke gelten.

Überraschender Weise wurde gefunden, dass strahlenhärtbare, wässrige Dispersionen von Polyurethanacrylaten nach kurzer Trocknungszeit blockfeste Beschichtungen geben, wenn diese Polyesterpolyole auf Basis von aromatischen Di- und / oder Tricarbonsäuren und aliphatischen Diolen mit 2 bis 4 Kohlenstoffatomen oder aliphatischen Triolen enthalten. Außerdem erreichen die Filme dieser Dispersionen sowohl im Klarlack als auch als Pigmentlack nach Strahlenhärtung eine hohe Pendelhärte und erwiesen sich als sehr resistent gegen Chemikalien und färbende Agenzien.

Die Erfindung betrifft strahlenhärtbare, wässrige Dispersionen auf Basis von Polyurethanacrylaten (i) enthaltend als Aufbaukomponenten
A) eine oder mehrere oligomere oder polymere Verbindungen mit mindestens einer gegenüber Isocyanat reaktiven Gruppe und mindestens einer radikalisch copolymerisierbaren Gruppe, wobei es sich um hydroxylgruppenhaltige Polyester(meth)acrylate mit einer OH-Zahl im Bereich von 15 bis 300 mg KOH/g Substanz handelt,
B) gegebenenfalls eine oder mehrere von A verschiedene, monomere Verbindungen, mit einer Hydroxyfunktion und mindestens einer (Meth)acrylatgruppe,
C) Polyesterpolyole, bestehend aus
   C1) aliphatischen Diolen mit 2 bis 4 Kohlenstoffatomen zwischen den beiden OH-Funktionen und / oder aliphatischen Triolen und
   C2) aromatischen Di- und / oder Tricarbonsäuren,
D) gegebenenfalls von A bis C verschiedene Polyole,
E) eine oder mehrere Verbindungen mit mindestens einer gegenüber Isocyanat reaktiven Gruppe und zusätzlich nichtionische, ionische oder zur Ausbildung von ionischen Gruppen befähigte Gruppen, die für die Polyurethandispersion dispergierend wirken,
F) organische Polyisocyanate,
G) gegebenenfalls von A bis E verschiedene Verbindungen mit mindestens einer gegenüber Isocyanat reaktiven Gruppe.

(Meth)acrylat" bezieht sich im Rahmen dieser Schrift auf entsprechende Acrylat- oder Methacrylatfunktionen oder auf eine Mischung beider.

Optional enthält die Dispersion eine Komponente ii, wobei es sich um Reaktivverdünner, die mindestens eine radikalisch polymerisierbare Gruppe aufweisen, handelt.

Aufbaukomponente A und gegebenenfalls B und / oder gegebenenfalls Komponente ii werden dabei in solchen Mengen eingesetzt, dass der Gehalt an radikalisch copolymerisierbaren Doppelbindungen zwischen 0,5 und 6,0, bevorzugt zwischen 1,0 und 5,5, besonders bevorzugt zwischen 1,5 und 5,0 mol/kg nicht wässriger Bestandteile der Dispersion beträgt.

Aufbaukomponente C wird zu 5-75, bevorzugt zu 10-50, besonders bevorzugt zu 15-40 Gew.-% eingesetzt, wobei sich die Komponenten A bis G zu 100 Gew.-% addieren.

Komponente ii wird zu 0-65, bevorzugt 0-40, besonders bevorzugt 0-35 Gew.-% eingesetzt, wobei sich die Komponenten i und ii zu 100 Gew.-% addieren.

Komponente A enthält oligomere oder polymere Verbindungen mit mindestens einer gegenüber Isocyanat reaktiven Gruppe und mindestens einer radikalisch copolymerisierbaren Gruppe, wobei es sich um hydroxylgruppenhaltige Polyester(meth)acrylate mit einer OH-Zahl im Bereich von 15 bis 300 mg KOH/g Substanz handelt.

Von den Polyester(meth)acrylaten werden als Komponente A die hydroxylgruppenhaltigen Polyester(meth) acrylate mit einer OH-Zahl im Bereich von 15 bis 300 mg KOH/g Substanz, bevorzugt von 60 bis 200 mg KOH/g Substanz eingesetzt. Bei der Herstellung der hydroxyfunktionellen Polyester(meth)acrylate (A) können insgesamt 7 Gruppen von Monomerbestandteilen zur Anwendung kommen:

Die erste Gruppe (a) enthält Alkandiole oder Diole oder Gemische dieser. Die Alkandiole weisen ein Molekulargewicht im Bereich von 62 bis 286 g/mol auf. Bevorzugt sind die Alkandiole ausgewählt aus der Gruppe von Ethandiol, 1,2- und 1,3-Propandiol, 1,2-, 1,3- und 1,4-Butandiol, 1,5-Pentandiol, 1,6-Hexandiol, Neopentylglykol, Cyclohexan-1,4-dimethanol, 1,2- und 1,4-Cyclohexandiol, 2-Ethyl-2-butylpropandiol. Bevorzugte Diole sind Ethersauerstoff-enthaltende Diole, wie Diethylenglykol, Triethylenglykol, Tetraethylenglykol, Dipropylenglykol, Tripropylenglykol, Polyethylen-, Polypropylen- oder Polybutylenglykole mit einem Molekulargewicht im Bereich von von 200 bis 4000, bevorzugt 300 bis 2000, besonders bevorzugt 450 bis 1200 g/mol. Umsetzungsprodukte der zuvor genannten Diole mit ε-Caprolacton oder anderen Lactonen können ebenfalls als Diole zum Einsatz gelangen.

Die zweiter Gruppe (b) enthält drei- und höherwertige Alkohole mit einem Molekulargewicht im Bereich von 92 bis 254 g/mol und / oder auf diesen Alkoholen gestartete Polyether. Besonders bevorzugte drei- und höherwertige Alkohole sind Glycerin, Trimethylolpropan, Pentaerythrit, Dipentaerythrit und Sorbit. Ein besonders bevorzugter Polyether ist das Umsetzungsprodukt von 1 mol Trimethylolpropan mit 4 mol Ethylenoxid.

Die dritte Gruppe (c) enthält Monoalkohole. Besonders bevorzugte Monoalkohole sind ausgewählt aus der Gruppe von Ethanol, 1- und 2-Propanol, 1- und 2-Butanol, 1- Hexanol, 2-Ethylhexanol, Cyclohexanol und Benzylalkohol.

Die vierte Gruppe (d) enthält Dicarbonsäuren mit einem Molekulargewicht im Bereich von 104 bis 600 g/mol und / oder deren Anhydride. Bevorzugte Dicarbonsäuren und deren Anhydride sind ausgewählt aus der Gruppe von Phthalsäure, Phthalsäureanhydrid, Isophthalsäure, Tetrahydrophthalsäure, Tetrahydrophthalsäureanhydrid, Hexahydrophthalsäure, Hexahydrophthalsäureanhydrid, Cyclohexandicarbonsäure, Maleinsäureanhydrid, Fumarsäure, Malonsäure, Bernsteinsäure, Bernsteinsäureanhydrid, Glutarsäure, Adipinsäure, Pimelinsäure, Korksäure, Sebacinsäure, Dodecandisäure, hydrierte Dimere der Fettsäuren, wie sie unter der sechsten Gruppe (f) aufgelistet sind

Die fünfte Gruppe (e) enthält Trimellithsäure oder Trimellithsäureanhydrid.

Die sechste Gruppe (f) enthält Monocarbonsäuren, wie z. B. Benzoesäure, Cyclohexancarbonsäure, 2-Ethylhexansäure, Capronsäure, Caprylsäure, Caprinsäure, Laurinsäure, und natürliche und synthetische Fettsäuren, wie z. B. Laurin-, Myristin-, Palmitin-, Margarin-, Stearin-, Behen-, Cerotin-, Palmitolein, Öl-, Icosen-, Linol-, Linolen- und Arachidonsäure.

Die siebte Gruppe (g) enthält Acrylsäure, Methacrylsäure und / oder dimere Acrylsäure.

Geeignete hydroxylgruppenhaltige Polyester(meth)acrylate (A) enthalten das Umsetzungsprodukt von mindestens einem Bestandteil aus Gruppe (a) oder (b) mit mindestens einem Bestandteil aus Gruppe (d) oder (e) und mindestens einem Bestandteil aus Gruppe (g).

Besonders bevorzugte Bestandteile aus der Gruppe (a) sind ausgewählt aus der Gruppe von Ethandiol, 1,2-und 1,3-Propandiol, 1,4-Butandiol, 1,6-Hexandiol, Neopentylglykol, Cyclohexan-1,4-dimethanol, 1,2- und 1,4-Cyclohexandiol, 2-Ethyl-2-butylpropandiol, Ethersauerstoff enthaltende Diole, ausgewählt aus der Gruppe von Diethylenglykol, Triethylenglykol, Tetraethylenglykol, Dipropylenglykol, und Tripropylenglykol. Bevorzugte Bestandteile aus der Gruppe (b) sind ausgewählt aus der Gruppe von Glycerin, Trimethylolpropan, Pentaerythrit oder das Umsetzungsprodukt von 1 mol Trimethylolpropan mit 4 mol Ethylenoxid. Besonders bevorzugte Bestandteile aus den Gruppen (d) bzw. (e) sind ausgewählt aus der Gruppe von Phthalsäureanhydrid, Isophthalsäure, Tetrahydrophthalsäureanhydrid, Hexahydrophthalsäure, Hexahydrophthal-säureanhydrid, Maleinsäureanhydrid, Fumarsäure, Bernsteinsäureanhydrid, Glutarsäure, Adipinsäure, Dodecandisäure, hydrierte Dimere der Fettsäuren, wie sie unter der 6. Gruppe (f) aufgelistet sind und Trimellithsäureanhydrid. Bevorzugter Bestandteil aus der Gruppe (g) ist Acrylsäure.

Gegebenenfalls können in diese Polyester(meth)acrylate auch aus dem Stand der Technik allgemein bekannte, dispergierend wirkende Gruppen eingebaut werden. So können als Alkoholkomponente anteilig Polyethylenglykole und / oder Methoxypolyethylenglykole verwendet werden. Als Verbindungen können auf Alkoholen gestartete Polyethylenglykole, Polypropylenglykole und deren Blockcopolymere sowie die Monomethylether dieser Polyglykole verwendet werden. Besonders geeignet ist Polyethylenglykol-mono-methylether mit einem Molekulargewicht im Bereich von 500-1500 g/mol.

Weiterhin ist es möglich, nach der Veresterung einen Teil der noch freien, nicht veresterten Carboxylgruppen, insbesondere die der (Meth)acrylsäure, mit Mono-, Di- oder Polyepoxiden umzusetzen. Bevorzugt als Epoxide sind die Glycidylether von monomerem, oligomerem oder polymerem Bisphenol-A, Bisphenol-F, Hexandiol und / oder Butandiol oder deren ethoxylierte und / oder propoxylierte Derivate. Diese Reaktion kann insbesondere zur Erhöhung der OH-Zahl des Polyester(meth)acrylats verwendet werden, da bei der Epoxid-Säure-Reaktion jeweils eine OH-Gruppe entsteht. Die Säurezahl des resultierenden Produkts liegt zwischen 0 und 20 mg KOH/g, bevorzugt zwischen 0 und 10 mg KOH/g und besonders bevorzugt zwischen 0 und 5 mg KOH/g Substanz. Die Reaktion wird bevorzugt durch Katalysatoren wie Triphenylphosphin, Thiodiglykol, Ammonium- und / oder Phosphoniumhalogeniden und / oder Zirkon- oder Zinnverbindungen wie Zinn(II)ethylhexanoat katalysiert.

Die Herstellung von Polyester(meth)acrylaten wird auf der Seite 3, Zeile 25 bis Seite 6, Zeile 24 der DE-A 4 040 290, auf Seite 5, Zeile 14 bis Seite 11, Zeile 30 der DE-A 3 316 592 und Seite 123 bis 135 von P. K. T. Oldring (Ed.) in Chemistry & Technology of UV & EB Formulations For Coatings, Inks & Paints, Vol. 2, 1991, SITA Technology, London, beschrieben.

Ebenfalls geeignet als Komponente A sind hydroxylgruppenhaltige Polyether(meth)acrylate, die aus der Umsetzung von Acrylsäure und / oder Methacrylsäure mit Polyethern hervorgehen, so z. B. Homo-, Co- oder Blockcopolymerisate von Ethylenoxid, Propylenoxid und/oder Tetrahydrofuran auf beliebigen hydroxy- und/oder aminfunktionellen Startermolekülen, wie z. B. Trimethylolpropan, Ethylenglykol, Propylenglykol, Diethylenglykol, Dipropylengykol, Glycerin, Pentaerythrit, Neopentylglykol, Butandiol und Hexandiol.

Ebenfalls geeignet als Komponente A) sind die an sich bekannten hydroxylgruppenhaltigen Epoxy(meth)acrylate mit einer OH-Zahl im Bereich von 20 bis 300 mg KOH/g, bevorzugt von 100 bis 280 mg KOH/g, besonders bevorzugt von 150 bis 250 mg KOH/g oder hydroxylgruppenhaltige Polyurethan(meth)acrylate mit einer OH-Zahl im Bereich von 20 bis 300 mg KOH/g, bevorzugt von 40 bis 150 mg KOH/g, besonders bevorzugt von 50 bis 100 mg KOH/g. Solche Verbindungen werden ebenfalls auf Seite 37 bis 56 in P. K. T. Oldring (Ed.), Chemistry & Technology of UV & EB Formulations For Coatings, Inks & Paints, Vol. 2,1991, SITA Technology, London beschrieben. Hydroxylguppenhaltige Epoxy(meth)acrylate basieren insbesondere auf Umsetzungsprodukten von Acrylsäure und / oder Methacrylsäure mit Epoxiden (Glycidylverbindungen) von monomeren, oligomeren oder polymeren Bisphenol-A, Bisphenol-F, Hexandiol und / oder Butandiol oder deren ethoxylierten und / oder propoxylierten Derivaten.

Bevorzugte ungesättigte Gruppen enthaltende Oligomere und Polymere (A) sind Verbindungen ausgewählt aus der Gruppe der Polyester(meth)acrylate, Polyether(meth)acrylate, Polyetherester(meth)acrylate und Polyepoxy (meth)acrylate, welche neben den ungesättigten Gruppen noch Hydroxylgruppen aufweisen.

Komponente B enthält monohydroxyfunktionelle, (Meth)acrylatgruppen-haltige Alkohole. Bei solchen monohydroxyfunktionellen, (Meth)acrylatgruppen-haltigen Alkoholen handelt es sich beispielsweise um 2-Hydroxyethyl(meth) acrylat, Caprolacton-verlängerte Modifikationen von 2-Hydroxyethyl(meth)acrylat wie Pemcure^{®} 12A (Cognis, DE), 2-Hydroxypropyl(meth)acrylat, 4-Hydroxybutyl(meth)acrylat, 3-Hydroxy-2,2-dimethylpropyl(meth)acrylat, die im Mittel monohydroxyfunktionellen Di-, Tri- oder Penta(meth)acrylate mehrwertiger Alkohole wie Trimethylolpropan, Glycerin, Pentaerythrit, Ditrimethylolpropan, Dipentaerythrit, ethoxyliertes, propoxyliertes oder alkoxyliertes Trimethylolpropan, Glycerin, Pentaerythrit, Ditrimethylolpropan, Dipentaerythrit oder deren technische Gemische.

Außerdem können auch Alkohole, die sich aus der Umsetzung von doppelbindungshaitigen Säuren mit gegebenenfalls doppelbindungshaltigen, monomeren Epoxidverbindungen erhalten lassen, als monohydroxyfunktionelle, (Meth)acrylatgruppen-haltige Alkohole eingesetzt werden. Bevorzugte Umsetzungsprodukte sind ausgewählt aus der Gruppe von (Meth)acrylsäure mit Glycidyl-(meth)acrylat oder dem Glycidylester tertiärer, gesättigter Monocarbonsäure. Tertiäre, gesättigte Monocarbonsäuren sind beispielsweise 2,2-Dimethylbuttersäure, Ethylmethylbutter-, Ethylmethylpentan-, Ethylmethylhexan-, Ethylmethylheptan- und / oder Ethylmethyloktansäure.

Besonders bevorzugt als monohydroxyfunktionelle, (Meth)acrylatgruppen-haltige Alkohole sind 2-Hydroxyethyl (meth)acrylat, 2-Hydroxypropyl(meth)acrylat, Pentaerythrittriacrylat, Dipentaerythritpentaacrylat und das Additionsprodukt aus Ethylmethylheptansäureglycidylester mit (Meth)acrylsäure und deren technische Gemische.

Ganz besonders bevorzugt ist 2-Hydroxyethyl(meth)acrylat.

Die monohydroxyfunktionellen, (Meth)acrylatgruppen-haltigen Alkohole (B) können für sich alleine als auch als Mischungen verwendet werden.

Bei Komponente C handelt es sich um hydroxyfunktionelle Polyester, bestehend aus aliphatischen Diolen mit 2 bis 4 Kohlenstoffen zwischen den beiden OH-Funktionen (Komponente C1), wie zum Beispiel 1,2-Ethandiol, 1,2-Propandiol, 1,3-Propandiol, Neopentylglykol, 2-Ethyl-2-butylpropandiol, 1,3-Butandiol, 1,2- und 1,4-Cyclohexandiol und / oder 1,4-Butandiol und / oder aliphatischen Triolen (Komponente C1), wie zum Beispiel Trimethylolethan, Trimethylolpropan, Trimethylolbutan, Glycerin und / oder Rizinusöl, sowie aromatischen Di- und / oder Tricarbonsäuren (Komponente C2), wie zum Beispiel Phthalsäure, Phthalsäureanhydrid, Isophthalsäure, Terephthalsäure und / oder Trimellithsäure sowie die Anhydride der genannten Säuren.

Die aromatischen Di- und / oder Trisäuren (C2) können auch in Mischung mit aliphatischen, ungesättigten Disäuren, wie zum Beispiel Maleinsäure, Maleinsäureanhydrid, Fumarsäure, Tetrahydrophthalsäure und / oder Tetrahydrophthalsäureanhydrid vorliegen.

Bevorzugt als Bausteine für die Polyesterpolyole (C) sind 1,2-Ethandiol, 1,2-Propandiol, 1,3-Propandiol, Neopentylglykol, Trimethylolpropan, Glycerin und / oder Rizinusöl (C1) sowie Phthalsäure, Phthalsäureanhydrid, Isophthalsäure und / oder Terephthalsäure (C2).

Besonders bevorzugt als Bausteine für die Polyesterpolyole (C) sind 1,2-Ethandiol, 1,2-Propandiol, Neopentylglykol und / oder Trimethylolpropan (C1), sowie Isophthalsäure und / oder Terephthalsäure (C2).

Aufbaukomponente C weist eine OH-Zahl von 20 bis 500, bevorzugt 40 bis 400 und besonders bevorzugt 70 bis 390 mg KOH/g Substanz auf.

Die Komponente D enthält monomere Mono-, Di- und/oder Triole jeweils mit einem Molekulargewicht von 32 bis 240 g/mol, wie z. B. Methanol, Ethanol, 1-Propanol, 1-Butanol, 1-Pentanol, 1-Hexanol, 2-Propanol, 2-Butanol, 2-Ethylhexanol, Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, 1,3-Butylenglykol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), 2,2-Dimethyl-3-hydroxypropionsäure-(2,2-dimethyl-3-hydroxypropylester), Glycerin, Trimethylolethan, Trimethylolpropan und / oder Trimethylolbutan. Bevorzugt sind Neopentylglykol, 1,4-Butandiol, 1,4-Cyclohexandimethanol, 1,6-Hexandiol und / oder Trimethylolpropan.

Des Weiteren kann Komponente D oligomere und/oder polymere, hydroxyfunktionelle Verbindungen enthalten, wenngleich diese weniger bevorzugt sind, da durch sie eine Flexibilisierung erreicht wird, die den hart machenden Effekt von Komponente C) zumindest zum Teil wieder aufhebt. Diese oligomeren und / oder polymeren, hydroxyfunktionellen Verbindungen sind beispielsweise Polyester, Polycarbonate, C2-, C3-, und / oder C4-Polyether, Polyetherester, Polycarbonatpolyester mit einer Funktionalität von 1,0 bis 3,0, jeweils mit einem Gewichtsmittel der Molmasse M_{w} im Bereich von 300 bis 4000, bevorzugt 500 bis 2500 g/mol.

Hydroxyfunktionelle Polyesteralkohole sind solche auf Basis von aliphatischen und / oder cycloaliphatischen Dicarbonsäuren mit monomeren Di- und Triolen, wie sie bereits als Komponente D aufgezählt wurden, sowie Polyesteralkohole auf Lacton-Basis.

Hydroxyfunktionelle Polyetherole sind beispielsweise durch Polymerisation von cyclischen Ethern oder durch Umsetzung von Alkylenoxiden mit einem Startermolekül erhältlich.

Hydroxyfunktionelle Polycarbonate sind hydroxyl-terminierte Polycarbonate, die durch Umsetzung von Diolen, Lacton-modifizierten Diolen oder Bisphenolen, z. B. Bisphenol A, mit Phosgen oder Kohlensäurediestern, wie Diphenylcarbonat oder Dimethylcarbonat, zugängliche Polycarbonate.

Die Komponente (E) umfasst ionische Gruppen, die entweder kationischer oder anionischer Natursein können, und / oder nichtionische hydrophile Gruppen. Kationisch, anionisch oder nichtionisch dispergierend wirkende Verbindungen sind solche, die beispielsweise Sulfonium-, Ammonium-,

Phosphonium-, Carboxylat-, Sulfonat-, Phosphonat-Gruppen oder die Gruppen, die durch Salzbildung in die vorgenannten Gruppen überführt werden können (potentiell ionische Gruppen), oder Polyethergruppen enthalten und durch vorhandene isocyanatreaktive Gruppen in die Makromoleküle eingebaut werden können. Bevorzugt geeignete isocyanatreaktive Gruppen sind Hydroxyl- und Amingruppen.

Geeignete anionische oder potentiell anionische Verbindungen (E) sind zum Beispiel Mono- und Dihydroxycarbonsäuren, Mono- und Diaminocarbonsäuren, Mono- und Dihydroxysulfonsäuren, Mono- und Diaminosulfonsäuren, Mono- und Dihydroxyphosphonsäuren, Mono- und Diaminophosphonsäuren und ihre Salze, wie Dimethylolpropionsäure, Dimethylolbuttersäure, Hydroxypivalinsäure, N-(2-Aminoethyl)-alanin, 2-(2-Amino-ethylamino)-ethansulfonsäure, Ethylendiaminpropyl- oder butylsulfonsäure, 1,2- oder 1,3-Propylendiamin-ethylsulfonsäure, 3-(Cyclohexylamino)propan-1-sulfonsäure, Äpfelsäure, Zitronensäure, Glykolsäure, Milchsäure, Glycin, Alanin, Taurin, Lysin, 3,5-Diaminobenzoesäure, ein Additionsprodukt von Isophorondiamin (1-Amino-3,3,5-trimethyl-5-aminomethylcyclohexan oder IPDA) und Acrylsäure (EP-A 916 647, Beispiel 1), das Addukt von Natriumbisulfit an Buten-2-diol-1,4, Polyethersulfonat sowie das propoxylierte Addukt aus 2-Butendiol und NaHSO3, wie es in DE-A2 446 440 auf Seite 5-9, Formel I-III beschrieben ist. Geeignete kationische oder in kationische Gruppen überführbare Bausteine sind beispielsweise Ethanolamin, Diethanolamin, Triethanolamin, 2-Propanolamin, Dipropanolamin, Tripropanolamin, N-Methylethanolamin, N-Methyl-diethanolamin und N,N-Dimethylethanolamin.

Besonders bevorzugte ionische oder potentiell ionische Verbindungen (E) sind solche, die Carboxyl- und / oder Sulfonatgruppen als ionische Gruppen enthalten, wie 2-(2-Amino-ethylamino)ethansulfonsäure, 3-(Cyclohexylamino) propan-1-sulfonsäure, das Additionsprodukt von Isophorondiamin und Acrylsäure (EP 916 647 A1, Beispiel 1), Hydroxypivalinsäure und / oder Dimethylolpropionsäure, sowie solche, die tertiäre Amine aufweisen, wie Triethanolamin, Tripropanolamin, N-Methyldiethanolamin und / oder N,N-Dimethylethanolamin

Ganz besonders bevorzugte ionische oder potentiell ionische Verbindungen (E) sind Hydroxypivalinsäure und / oder Dimethylolpropionsäure.

Geeignete nichtionisch hydrophilierend wirkende Verbindungen sind zum Beispiel Polyoxyalkylenether, die mindestens eine Hydroxy- oder Aminogruppe enthalten. Diese Polyether enthalten einen Anteil von ≥ 30 Gew.-% bis ≤ 100 Gew.-% an Bausteinen, die vom Ethylenoxid abgeleitet sind. In Frage kommen linear aufgebaute Polyether einer Funktionalität zwischen ≥ 1 und ≤ 3, aber auch Verbindungen der allgemeinen Formel (I), 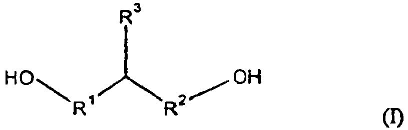 in welcher

R1 und R2 unabhängig voneinander jeweils einen zweiwertigen aliphatischen, cycloaliphatischen oder aromatischen Rest mit 1 bis 18 C-Atomen, die durch Sauerstoff und/oder Stickstoffatome unterbrochen sein können, bedeuten und R3 für einen alkoxyterminierten Polyethylenoxidrest steht.

Nichtionisch hydrophilierend wirkende Verbindungen sind beispielsweise auch einwertige, im statistischen Mittel ≥ 5 bis ≤ 70, bevorzugt ≥ 7 bis ≤ 55 Ethylenoxideinheiten pro Molekül aufweisende Polyalkylenoxidpolyetheralkohole, wie sie durch Alkoxylierung geeigneter Startermoleküle zugänglich sind.

Geeignete Startermoleküle sind beispielsweise gesättigte Monoalkohole wie Methanol, Ethanol, n-Propanol, Isopropanol, n-Butanol, Isobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykol-monoalkylether wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Bevorzugte Startermoleküle sind gesättigte Monoalkohole. Besonders bevorzugt wird Diethylenglykolmonobutylether als Startermolekül verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den Polyalkylenoxidpolyetheralkoholen handelt es sich entweder um reine Polyethylenoxidpolyether oder gemischte Polyalkylenoxidpolyether, deren Alkylenoxideinheiten zu ≥ 30 mol-%, bevorzugt zu ≥ 40 mol-% Ethylenoxideinheiten umfassen. Bevorzugte nichtionische Verbindungen sind monofunktionelle gemischte Polyalkylenoxidpolyether, die ≥ 40 mol-% Ethylenoxid- und ≤ 60 mol-% Propylenoxideinheiten aufweisen.

Die unter Komponente E genannten Säuren werden durch Umsetzung mit Neutralisationsmitteln, wie Triethylamin, Ethyldiisopropylamin, Dimethylcyclohexylamin, Dimethylethanolamin, Ammoniak, N-Ethylmorpholin, LiOH, NaOH und / oder KOH in die entsprechenden Salze überführt. Der Neutralisationsgrad liegt dabei bevorzugt zwischen 50 und 125%.

Die unter Komponente E genannten Basen werden durch Umsetzung mit Neutralisationsmitteln, wie z. B. anorganische Säuren, wie beispielsweise Salzsäure, Phosphorsäure und / oder Schwefelsäure, und / oder organischen Säuren, wie beispielsweise Ameisensäure, Essigsäure Milchsäure, Methansulfsonsäure, Ethansulfonsäure und / oder p-Toluolsulfonsäure, in die entsprechenden Salze überführt. Der Neutralisationsgrad liegt dabei bevorzugt zwischen 50 und 125%.

Die unter Komponente E aufgeführten Verbindungen können auch in Mischungen verwendet werden.

Die ionische Hydrophilierung und die Kombination von ionischer und nicht-ionischer Hydrophilierung sind gegenüber der rein nicht-ionischen Hydrophilierung bevorzugt.

Die Komponente F sind Polyisocyanate ausgewählt aus der Gruppe von aromatischen, araliphatischen, aliphatischen oder cycloaliphatischen Polyisocyanaten oder Mischungen solcher Polyisocyanate, wie z.B. 1,3-Cyclohexandiisocyanat, 1-Methyl-2,4-diisocyanato-cyclohexan, 1-Methyl-2,6-diisocyanato-cyclohexan, Tetramethylendiisocyanat, 4,4'-Diisocyanatodiphenylmethan, 2,4'-Diisocyanatodiphenylmethan, 2,4-Diisocyanatotoluol, 2,6-Diisocyanatotoluol, α,α,α,'α,'-Tetramethyl-m- oder p-Xylylendiisocyanat, 1,6-Hexamethylendiisocyanat, 1-Isocyanato-3,3,5-trimethyl-5-isocyanatomethylcyclohexan (Isophorondiisocyanat oder IPDI), 4,4'-Diisocyanato-dicyclohexylmethan, 4-Isocyanatomethyl-1,8-octan-diisocyanat (Triisocyanatononan, TIN) (EP-A 928 799) sowie deren Mischungen. Ebenfalls geeignet sind Homologe bzw. Oligomere dieser aufgezählten Polyisocyanate mit Biuret-, Carbodiimid-, Isocyanurat-, Allophanat-, Iminooxadiazindion- und / oder Uretdiongruppen, deren Mischungen untereinander sowie Mischungen mit den zuvor aufgeführten Polyisocyanaten. Bevorzugt sind 1,6-Hexamethylendiisocyanat, 1-Isocyanato-3,3,5-trimethyl-5-isocyanatomethylcyclohexan (Isophorondiisocyanat oder IPDI) und 4,4'-Diisocyanato-dicyclohexylmethan sowie deren Mischungen untereinander. Ebenfalls bevorzugt sind Homologe bzw. Oligomere von 1-Isocyanato-3,3,5-trimethyl-5-isocyanatomethylcyclohexan (Isophorondiisocyanat oder IPDI) und 4,4'-Diisocyanato-dicyclohexylmethan mit Biuret-, Carbodiimid-, Isocyanurat-, Allophanat-, Iminooxadiazindion- und / oder Uretdiongruppen, deren Mischungen untereinander sowie Mischungen mit den zuvor aufgeführten, bevorzugten Polyisocyanaten.

Zur Erhöhung der Molmasse werden Mono- und Diamine und / oder mono- oder difunktionelle Aminoalkohole als Komponente G verwendet. Bevorzugte Diamine sind solche, die gegenüber den Isocyanatgruppen reaktiver sind als Wasser, da die Verlängerung des Polyesterurethan(meth)acrylats gegebenenfalls im wässrigen Medium stattfindet. Besonders bevorzugt sind die Diamine ausgewählt aus der Gruppe von Ethylendiamin, 1,6-Hexamethylendiamin, Isophorondiamin, 1,3-, 1,4-Phenylendiamin, 4,4'-Diphenylmethandiamin, aminofunktionelle Polyethylenoxide, aminofunktionelle Polypropylenoxide (bekannt unter dem Namen Jeffamin^{®}D-Reihe [Huntsman Corp. Europe, Zavantem, Belgien]) und Hydrazin. Ganz besonders bevorzugt ist Ethylendiamin.

Bevorzugte Monoamine sind ausgewählt aus der Gruppe von Butylamin, Ethylamin und Amine der Jeffamin^{®} M-Reihe (Huntsman Corp. Europe, Zavantem, Belgien), aminofunktionelle Polyethylenoxide, aminofunktionelle Polypropylenoxide und / oder Aminoalkohole.

Die Komponente ii sind Reaktivverdünner, unter denen Verbindungen zu verstehen sind, die mindestens eine radikalisch polymerisierbare Gruppe, bevorzugt Acrlyat- und Methacrylatgruppen, und bevorzugt keine gegenüber Isocyanat- oder Hydroxygruppen reaktiven Gruppen enthalten.

Bevorzugte Verbindungen ii weisen 2 bis 6 (Meth)acrylatgruppen auf, besonders bevorzugte 4 bis 6.

Besonders bevorzugte Verbindungen ii weisen einen Siedepunkt von mehr als 200 °C bei Normaldruck auf.

Reaktivverdünner sind allgemein in P. K. T. Oldring (Herausgeber), Chemistry & Technology of UV & EB Formulations for Coatings, Inks & Paints, Vo. II, Chapter III: Reactive Diluents for UV & EB Curable Formulations, Wiley and SITA Technology, London 1997 beschrieben .

Reaktivverdünner sind beispielsweise die mit (Meth)acrylsäure vollständig veresterten Alkohole Methanol, Ethanol, 1-Propanol, 1-Butanol, 1-Pentanol, 1-Hexanol, 2-Propanol, 2-Butanol, 2-Ethylhexanol, Dihydrodicyclopentadienol, Tetrahydrofurfurylalkohol, 3,3,5-Trimethylhexanol, Octanol, Decanol, Dodecanol, Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, 1,3-Butylenglykol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), Glycerin, Trimethylolethan, Trimethylolpropan Trimethylolbutan, Pentaerythrit, Ditrimethylolpropan, Dipentaerythrit, Sorbitol sowie ethoxylierte und / oder propoxylierte Derivate der aufgeführten Alkohole und die bei der (Meth)acrylierung der vorgenannten Verbindungen anfallenden technischen Gemische.

Die Komponente ii ist bevorzugt ausgewählt aus der Gruppe von (Meth)acrylaten von Tetrolen und Hexolen, wie (Meth)acrylate von Pentaerythrit, Ditrimethylolpropan, Dipentaerythrit, Sorbitol, ethoxyliertes, propoxyliertes oder alkoxyliertes Pentaerythrit, Ditrimethylolpropan, Dipentaerythrit, Sorbitol sowie ethoxylierte und / oder propoxylierte Derivate der aufgeführten Alkohole und die bei der (Meth)acrylierung der vorgenannten Verbindungen anfallenden technischen Gemische.

Zur Herstellung der erfindungsgemäßen Dispersionen können sämtliche, aus dem Stand der Technik bekannte Verfahren wie Emulgator-Scherkraft-, Aceton-, Präpolymer-Misch-, Schmelz-Emulgier-, Ketimin- und Feststoff-Spontan-Dispergier-Verfahren oder Abkömmlinge davon verwendet werden. Eine Zusammenfassung dieser Methoden findet sich in Methoden der Organischen Chemie, Houben-Weyl, 4. Auflage, Band E20 /Teil 2 auf Seite 1682, Georg Thieme Verlag, Stuttgart, 1987. Bevorzugt ist das Schmelz-Emulgier- und das Aceton-Verfahren. Besonders bevorzugt wird das Aceton-Verfahren.

Gegenstand der Erfindung ist auch ein Verfahren zur Herstellung strahlenhärtbarer, wässriger Dispersionen auf Basis von Polyurethanacrylaten (i), dadurch gekennzeichnet, dass durch Umsetzen der Komponenten A-E in einem oder mehreren Reaktionsschritten mit Komponente F ein Polyurethanacrylatprepolymer (i) erhalten wird, wobei ein Neutralisationsmittel zur Erzeugung der für die Dispergierung notwendigen ionischen Gruppen vor, während oder nach der Prepolymerherstellung zugegeben werden kann, gefolgt von einem Dispergierschritt durch Zugabe von Wasser zum Prepolymer bzw. Überführen des Prepolymers in eine wässrige Vorlage, wobei vor, während oder nach der Dispergierung eine Kettenverlängerung mittels Komponente F erfolgen kann.

Gegenstand der Erfindung ist auch ein Verfahren gemäß vorstehender Beschreibung, bei dem ein oder mehrere Reaktivverdünner, enthaltend mindestens eine radikalisch polymerisierbare Gruppe, (Komponente ii) beigemischt werden.

Zur Herstellung des Reaktionsproduktes werden die Komponenten A bis E im Reaktor vorgelegt und gegebenenfalls mit Aceton verdünnt. Gegebenenfalls kann auch Komponente ii zu den Komponenten A bis E zugesetzt werden. Zur Beschleunigung der Addition an Isocyanat können Isocyanatadditionsreaktionkatalysatoren wie zum Beispiel Triethylamin, 1,4-Diazabicyclo-[2,2,2]-oktan, Zinndioktoat oder Dibutylzinndilaurat zugesetzt werden, und die Mischung erwärmt werden, um ein Anspringen der Reaktion zu ermöglichen. In der Regel sind dazu Temperaturen von 30 bis 60 °C nötig. Anschließend dosiert man das oder die Polyisocyanate (F) zu. Auch die umgekehrte Variante ist möglich, wobei dann die Polyisocyanate (F) vorgelegt und die isocyanatreaktiven Komponenten A) bis E) zugegeben werden. Die Zugabe der Komponenten A bis E kann auch nacheinander und in beliebiger Reihenfolge erfolgen. Ebenfalls ist eine stufenweise Umsetzung der Komponenten möglich, das heißt die separate Umsetzung von Komponente F mit einer oder mehreren isocyanatreaktiven Komponenten A, B, C, D und / oder E bevor das gewonnene Addukt mit den noch nicht verwendeten Komponenten weiter umgesetzt wird.

Zur Kontrolle der Reaktion wird der NCO-Gehalt in regelmäßigen Abständen über Titration, Infrarot- oder Nahinfrarot-Spektroskopie, bestimmt.

Die molaren Verhältnisse von Iscocyanatgruppen in F zu gegenüber Isocyanaten reaktiven Gruppen in A bis E betragen von 0,8 : 1 bis 2,5 : 1, bevorzugt 1,2 : 1 bis 1,5 : 1.

Nach der Herstellung der Herstellung des Produktes (i) nach dem erfmdungsgemäßen Verfahren aus den Komponenten A bis F erfolgt, falls dies noch nicht in den Ausgangsmolekülen durchgeführt wurde, die Salzbildung der ionisch dispergierend wirkenden Zentren der Verbindungen E. Im Fall, dass Komponente E saure Gruppen enthält, werden bevorzugt Basen ausgewählt aus der Gruppe von Triethylamin, Ethyldiisopropylamin, Dimethylcyclohexylamin, Dimethylethanolamin, Ammoniak, N-Ethylmorpholin, LiOH, NaOH und / oder KOH eingesetzt. Im Fall, dass Komponente E basische Gruppen enthält, werden bevorzugt Säuren, wie z. B. Milchsäure, Essigsäure, Phosphorsäure, Chlorwasserstoffsäure und / oder Schwefelsäure eingesetzt. Werden als Komponente E nur Ethergruppen enthaltende Verbindungen eingesetzt, entfällt dieser Neutralisationsschritt.

Im Anschluss kann optional ein Reaktivverdünner (ii) oder einer Mischung von Reaktivverdünnern (ii) zugegeben werden. Das Zumischen von Komponente ii erfolgt bevorzugt bei 30-45 °C. Sobald diese sich gelöst hat, folgt gegebenenfalls der letzte Reaktionsschritt, bei dem im wässrigen Medium eine Molmassenerhöhung und die Ausbildung der für das erfindungsgemäße Beschichtungssystem benötigten Dispersionen stattfinden: Das Polyurethan, synthetisiert aus den Komponenten A, B, C, D, E und F, und gegebenenfalls der oder die Reaktivverdünner (ii) gegebenenfalls gelöst in Aceton werden unter starkem Rühren entweder in das Dispergierwasser, das das oder die Amine (G) enthält, eingetragen oder man rührt umgekehrt die Dispergierwasser-Amin-Mischung zu der Polyurethanlösung. Außerdem bilden sich die Dispersionen aus, die im erfindungsgemäßen Beschichtungssystem enthalten sind. Die eingesetzte Menge an Amin (G) hängt von den noch vorhandenen, nicht umgesetzten Isocyanatgruppen ab. Die Umsetzung der noch freien Iscocyanatgruppen mit dem Amin (G) kann zu 35% bis 150% erfolgen. In dem Fall, dass ein Unterschuss an Amin (G) eingesetzt wird, reagieren noch freie Isocyanatgruppen langsam mit Wasser ab. Wird ein Überschuss an Amin (G) verwendet, so liegen keine unreagierten Isocyanatgruppen mehr vor und es wird ein aminfunktionelles Polyurethan erhalten. Bevorzugt werden 80% bis 110%, besonders bevorzugt 90% bis 100% der noch freien Isocyanatgruppen mit dem Amin (G) umgesetzt.

In einer weiteren Variante ist es möglich, die Molmassenerhöhung durch das Amin (G) bereits in acetonischer Lösung, d.h. vor der Dispergierung, und gegebenenfalls vor oder nach der Zugabe der Reaktivverdünner (ii) durchzuführen.

In einer weiteren Variante ist es möglich, die Molmassenerhöhung durch das Amin (G) nach dem Dispergierschritt durchzuführen.

Falls erwünscht, kann das organische Lösungsmittel - sofern vorhanden - abdestilliert werden. Die Dispersionen haben dann einen Festkörpergehalt von 20 bis 60 Gew.-%, insbesondere 30 bis 58 Gew.-%.

Es ist ebenfalls möglich, Dispergier- und Destillationsschritt parallel, das heißt gleichzeitig oder zumindest teilweise gleichzeitig durchzuführen.

Gegenstand der Erfindung ist auch die Verwendung der erfindungsgemäßen strahlenhärtbaren, wässrigen Dispersionen zur Herstellung von Beschichtungen insbesondere von Lacken und Klebstoffen.

Die erfindungsgemäßen Dispersionen ergeben nach Entfernen des Wassers mit üblichen Methoden, wie Wärme, Wärmestrahlung, bewegter ggf. getrockneter Luft und / oder Mikrowellen, klare Filme. Durch anschließende strahlenchemisch und / oder radikalisch induzierte Vernetzung härten die Filme zu besonders hochwertigen und chemikalienresistenten Lacküberzügen aus.

Zur strahlenchemisch induzierten Polymerisation ist elektromagnetische Strahlung geeignet, deren Energie, gegebenenfalls unter Zusatz von geeigneten Photoinitiatoren, ausreicht, um eine radikalische Polymerisation von (Meth) acrylat-Doppelbindungen zu bewirken.

Bevorzugt erfolgt die strahlenchemisch induzierte Polymerisation mittels Strahlung mit einer Wellenlänge von kleiner 400 nm, wie UV-, Elektronen-, Röntgen- oder Gamma-Strahlen. Besonders bevorzugt ist die UV-Strahlung, wobei die Härtung mit UV-Strahlung in Gegenwart von Fotoinitiatoren ausgelöst wird. Bei den Fotoinitiatoren wird prinzipiell zwischen zwei Typen unterschieden, dem unimolekularen (Typ I) und dem bimolekularen (Typ II). Geeignete (Typ I)-Systeme sind aromatische Ketonverbindungen, wie z. B. Benzophenone in Kombination mit tertiären Aminen, Alkylbenzophenone, 4,4'-Bis(dimethylamino)benzophenon (Michlers Keton), Anthron und halogenierte Benzophenone oder Mischungen der genannten Typen. Weiter geeignet sind (Typ II)-Initiatoren wie Benzoin und seine Derivate, Benzilketale, Acylphosphinoxide, 2,4,6-Trimethylbenzoyl-diphenylphosphinoxid, Bisacylphosphinoxide, Phenylglyoxylsäureester, Campherchinon, α-Aminoalkylphenone, α,α-Dialkoxyacetophenone und α-Hydroxyalkylphenone. Bevorzugt sind Fotoinitiatoren, die leicht in wässrige Beschichtungsmittel einzuarbeiten sind. Solche Produkte sind beispielsweise Irgacure^{®} 500 (eine Mischung von Benzophenon und (1-Hydroxycyclohexyl)phenylketon, Fa. Ciba, Lampertheim, DE), Irgacure^{®} 819 DW (Phenylbis-(2,4,6-trimethylbenzoyl)-phosphinoxid, Fa. Ciba, Lampertheim, DE), Esacure^{®} KIP EM (Oligo-[2-hydroxy-2-methyl-1-[4-(1-methylvinyl)-phenyl]-propanone], Fa. Lamberti, Aldizzate, Italien). Es können auch Gemische dieser Verbindungen eingesetzt werden.

Zur Einarbeitung der Photoinitiatoren können auch polare Lösemittel, wie z. B. Aceton und Isopropanol, verwendet werden.

Vorteilhaft wird die UV-Härtung vorteilhaft bei 30-70 °C durchgeführt werden, weil bei höherer Temperatur der Umsetzungsgrad an (Meth)acrylatgruppen tendenziell erhöht ist. Dies kann bessere Beständigkeitseigenschaften zur Folge haben. Allerdings ist bei der UV-Härtung eine mögliche Temperaturempfindlichkeit des Substrats zu berücksichtigen, so dass optimale Härtungsbedingungen für eine bestimmte Beschichtungsmittel-Substrat-Kombination vom Fachmann in einfachen Vorversuchen zu ermitteln sind.

Der oder die Strahler, die die radikalische Polymerisation auslösen, können dabei ortsfest sein und das beschichtete Substrat wird durch geeignete übliche Vorrichtungen am Strahler vorbeibewegt oder die Strahler sind durch übliche Vorrichtungen beweglich, so dass die beschichteten Substrate während der Härtung ortsfest sind. Es ist auch möglich die Bestrahlung z.B. in Kammern durchzuführen, bei denen das beschichtete Substrat in die Kammer eingebracht wird, anschließend die Strahlung für einen bestimmten Zeitraum eingeschaltet wird, und nach der Bestrahlung das Substrat wieder aus der Kammer entfernt wird.

Gegebenenfalls wird unter Inertgasatmosphäre, d. h. unter Sauerstoffausschluss, gehärtet, um eine Inhibierung der radikalischen Vernetzung durch Sauerstoff zu verhindern.

Erfolgt die Härtung thermisch-radikalisch, eignen sich wasserlösliche Peroxide oder wässrige Emulsionen nicht-wasserlöslicher Initiatoren. Diese Radikalbildner können in bekannter Weise mit Beschleunigern kombiniert werden.

Die erfindungsgemäßen Beschichtungssysteme lassen sich durch die üblichen Techniken auf unterschiedlichste Substrate applizieren, bevorzugt Spritzen, Walzen, Fluten, Drucken, Rakeln, Gießen, Streichen und Tauchen.

Mit den erfindungsgemäßen Beschichtungssystemen können grundsätzlich alle Substrate lackiert bzw. beschichtet werden. Bevorzugte Substrate sind ausgewählt aus der Gruppe bestehend aus mineralischen Untergründen, Holz, Holzwerkstoffen, Möbeln, Parkett, Türen, Fensterrahmen, metallischen Gegenständen, Kunststoffen, Papier, Pappe, Kork, mineralischen Substraten, Textilien oder Leder. Sie eignen sich hierbei als Grundierung und / oder als Decklack. Zusätzlich können die erfindungsgemäßen Beschichtungssysteme auch in oder als Klebstoffe eingesetzt werden, z. B. in Kontaktklebstoffen, in thermoaktivierbaren Klebstoffen oder in Kaschierklebstoffen.

Die erfindungsgemäßen Beschichtungssysteme können alleine aber auch in Bindemittelmischungen mit anderen Dispersionen eingesetzt werden. Dies können Dispersionen sein, die ebenfalls ungesättigte Gruppen enthalten, wie z. B. ungesättigte, polymerisierbare Gruppen enthaltende Dispersionen auf Polyester-, Polyurethan-, Polyepoxy (meth)acrylat-, Polyether-, Polyamid-, Polysiloxan-, Polycarbonat-, Epoxyacrylat-, Polyesteracrylat-, Polyurethan-Polyacrylat- und / oder Polyacrylatbasis.

Es können auch solche Dispersionen auf Basis von Polyestern, Polyurethanen, Polyethern, Polyamiden, Polyvinylestern, Polyvinylethem, Polysiloxanen, Polycarbonaten und / oder Polyacrylaten, in den erfindungsgemäßen Beschichtungssystemen enthalten sein, die funktionelle Gruppen, wie Alkoxysilangruppen, Hydroxygruppen und / oder gegebenenfalls in blockierter Form vorliegende Isocyanatgruppen aufweisen. So können Dual-Cure-Systeme hergestellt werden, die über zwei verschiedene Mechanismen ausgehärtet werden können.

Ebenfalls für Dual-Cure-Systeme können dem erfindungsgemäßen Beschichtungssystem, weiterhin so genannte Vernetzter zugesetzt werden. Es kommen bevorzugt nicht-blockierte und / oder blockierte Polyisocyanate, Polyaziridine, Polycarbodiimide sowie Melaminharze in Frage. Besonders bevorzugt sind nicht-blockierte und / oder blockierte, hydrophilierte Polyisocyanate für wässrige Beschichtungsmittel. Bevorzugt werden ≤ 20 Gew.-%, besonders bevorzugt ≤ 10 Gew.-% an festem Vernetzer auf den Festgehalt des Beschichtungsmittels zugesetzt.

Es können auch Dispersionen auf Basis von auf Polyestern, Polyurethanen, Polyethern, Polyamiden, Polysiloxanen, Polyvinylethem, Polybutadienen, Polyisoprenen, Chlorkautschuken, Polycarbonaten, Polyvinylestem, Polyvinylchloriden, Polyacrylaten, Polyurethan-Polyacrylat-, Polyesteracrylat-, Polyetheracrylat-, Alkyd-, Polycarbonat-, Polyepoxy-, Epoxy(meth)acrylatbasis in den erfindungsgemäßen Beschichtungssystemen enthalten sein, die keine funktionellen Gruppen aufweisen. Damit kann der Grad der Vemetzungsdichte reduziert werden, die physikalische Trocknung beeinflusst, z. B. beschleunigt werden, oder eine Elastifizierung bzw. auch eine Haftungsanpassung vorgenommen werden.

Beschichtungsmittel, welche die erfindungsgemäßen Beschichtungssysteme enthalten, können auch Aminovernetzerharze, auf Melamin- oder Harnstoffbasis und / oder Polyisocyanate mit freien oder mit blockierten Polyisocyanatgruppen, auf Basis von gegebenenfalls hydrophilierenden Gruppen enthaltenden Polyisocyanaten aus Hexamethylendiisocyanat, Isophorondiisocyanat und / oder Toluylidendiisocyanat mit Urethan-, Uretdion-, Iminoxadiazindion-, Isocyanurat-, Biuret- und / oder Allophanatstrukturen in den erfindungsgemäßen Beschichtungssystemen zugesetzt sein. Als weitere Vernetzer sind auch Carbodiimide oder Polyaziridine möglich.

Die erfindungsgemäßen Beschichtungssysteme können mit den in der Lacktechnologie bekannten Bindemitteln, Hilfsstoffen und Additiven, wie z. B. Pigmente, Farbstoffe oder Mattierungsmittel versetzt bzw. kombiniert werden. Dies sind Verlaufs- und Benetzungsadditive, Slip-Additive, Pigmente einschließlich Metallic-Effektpigmente, Füllstoffe, Nanopartikel, Lichtschutzpartikel, Anti-Vergilbungsadditive, Verdicker und Additive zur Reduktion der Oberflächenspannung.

Die erfindungsgemäßen Beschichtungssysteme sind für die Beschichtungen von Folien geeignet, wobei zwischen physikalischer Trocknung und UV-Härtung eine Verformung der beschichteten Folie stattfindet.

Besonders geeignet sind die erfindungsmäßigen Beschichtungssysteme für Klarlackanwendungen auf Holz-und Kunststoffsubstraten, bei denen es nach physikalischer Trocknung auf Blockfestigkeit und nach Strahlenhärtung auf gute Resistenzen gegen Chemikalien ankommt.

Ebenfalls besonders geeignet sind die erfindungsmäßigen Beschichtungssysteme für Holz- und Kunststoffanwendungen mit einem Pigmentgehalt ≥ 10 Gew.-%, bezogen auf die gesamte Formulierung. Sollte es aufgrund von hohen Pigmentgehalten zu einer unvollständigen Reaktion der strahlungshärtbaren Gruppen im Beschichtungssystem während der Strahlungshärtung kommen, so werden blockfeste Beschichtungen erhalten.

Beschichtungsmittel enthaltend die erfindungsgemäßen strahlenhärtbaren, wässrigen Dispersionen auf Polyurethanacrylatbasis, sowie Vernetzer auf Basis von Aminoharzen, blockierten Polyisocyanaten, nicht blockierten Polyisocyanaten, Polyaziridinen und / oder Polycarbodiimiden, und / oder ein oder mehrere weitere Dispersionen, sind ebenfalls Gegenstand der vorliegenden Erfindung.

Weiterhin sind Substrate beschichtet mit den erfindungsgemäßen Beschichtungssystemen ein Gegenstand dieser Erfindung.

### Beispiele

Der NCO-Gehalt wurde jeweils gemäß DIN 53185 titrimetrisch verfolgt.

Der Feststoffgehalt wurde gravimetrisch nach Abdampfen aller nichtflüchtigen Bestandteile gemäß DIN 53216 bestimmt.

Die mittlere Teilchengröße wurde durch Laser-Korrelationsspektroskopie ermittelt.

### Beispiel 1:

### Herstellung eines erfindungsgemäßen Polyesters, Komponente C

6574 Teile Isophthalsäure, Komponente C2, 1327 Teile Trimethylolpropan, Komponente C1, 7207 Teile Neopentylglykol, Komponente C1, und 4 Teile Fascat^{®} 4100 (Butylstannonsäure, Arcema Inc., Philadelphia, PA, US) wurden gemeinsam unter Rühren auf 190 °C aufgeheizt. Diese Temperatur wurde gehalten, bis eine Säurezahl von weniger als 1,5 mg KOH/g Substanz erreicht war. Es wurde ein Polyester mit einer mittleren Funktionalität von 2,3 und einer Hydroxylzahl von 365 mg KOH/g Substanz erhalten.

### Beispiel 2:

### Herstellung eines erfindungsgemäßen Polyesters, Komponente C

1661 Teile Isophthalsäure, Komponente C2, 1661 Teile Terephthalsäure, Komponente C2, 782 Teile Ethylenglykol, Komponente C1, 1206 Teile Neopentylglykol, Komponente C1, und 1,5 Teile Fascat^{®} 4100 (Butylstannonsäure, Arcema Inc., Philadelphia, PA, US) wurden gemeinsam unter Rühren auf 190 °C aufgeheizt. Diese Temperatur wurde gehalten, bis eine Säurezahl von weniger als 1,5 mg KOH/g Substanz erreicht war. Es wurde ein Polyester mit einer mittleren Funktionalität von 2,0 und einer Hydroxylzahl von 99 mg KOH/g Substanz erhalten.

### Beispiel 3:

### Herstellung eines erfindungsgemäßen Polyesters, Komponente C

1480 Teile Phthalsäureanhydrid, Komponente C2, und 985 Teile Ethylenglykol, Komponente C1, wurden gemeinsam unter Rühren auf 220 °C aufgeheizt. Diese Temperatur wurde gehalten, bis eine Säurezahl von weniger als 1,5 mg KOH/g Substanz erreicht war. Es wurde ein Polyester mit einer mittleren Funktionalität von 2,0 und einer Hydroxylzahl von 288 mg KOH/g Substanz erhalten.

### Beispiel 4:

### Herstellung eines nicht erfindungsgemäßen Polyesters, Komponente C

1460 Teile Adipinsäure, Komponente C2, 219 Teile Trimethylolpropan, Komponente C1, und 1435 Teile Neopentylglykol, Komponente C1, wurden gemeinsam unter Rühren auf 220 °C aufgeheizt. Diese Temperatur wurde gehalten, bis eine Säurezahl von weniger als 1,5 mg KOH/g Substanz erreicht war. Es wurde ein Polyester mit einer mittleren Funktionalität von 2,3 und einer Hydroxylzahl von 255 mg KOH/g Substanz erhalten.

### Beispiel 5:

### Herstellung einer erfindunigsgemäßen, UV-härtbaren, wässrigen Polyurethan-Dispersion

29,6 Teile des Polyesters aus Beispiel 1), Komponente C, wurden bei 65 °C in 66 Teilen Aceton aufgeschmolzen. Danach wurden 156 Teile des Polyesteracrylats Laromer^{®} 8800 (BASF SE, Ludwigshafen, DE) mit einer OH-Zahl von 70 mg KOH/g Substanz, Komponente A, 7,0 Teile Neopentylglykol, Komponente D, 18,2 Teile Dimethylolpropionsäure, Komponente E, 34,7 Teile Hexamethylendiisocyanat, Komponente F, 69,5 Teile Isophorondiisocyanat, Komponente F, und 0,15 Teile Dibutylzinndilaurat bei 40 °C zugegeben, verrührt und bei 60 °C unter Rühren bis zu einem NCO-Gehalt von 2,0 Gew.-% umgesetzt. Anschließend erfolgte die Neutralisation durch Zugabe und Unterrühren von 10,8 Teilen Triethylamin. Die klare Lösung wurde unter Rühren in 605 Teile Wasser eingetragen. Daraufhin wurde eine Mischung aus 6,1 Teilen Ethylendiamin, Komponente G, und 33 Teilen Wasser der Dispersion unter Rühren zugesetzt. Im Anschluss wurde das Aceton unter leichtem Vakuum aus der Dispersion abdestilliert. Man erhielt eine erfindungsgemäße, UV-härtbare, wässrige Polyurethan-Dispersion 5) mit einem Feststoffgehalt von 35 Gew.-%, einer mittleren Teilchengröße von 60 nm und einem pH-Wert von 8,3.

### Beispiel 6:

### Herstellung einer erfindungsgemäßen, UV-härtbaren, wässrigen Polyurethan-Dispersion

157 Teile des Polyesteracrylats Agisyn^{®} 720 (AGI Co., Taipei, Taiwan) mit einer OH-Zahl von 116 mg KOH/g Substanz, Komponente A, 257 Teile einer 80%igen acetonischen Lösung des Polyesters aus Beispiel 2), Komponente C, 15,6 Teile 1,4-Butandiol, Komponente D, 20,1 Teile Dimethylolpropionsäure, Komponente E, 50,4 Teile Hexamethylendiisocyanat, Komponente F, 102,2 Teile Isophorondiisocyanat, Komponente F, und 0,6 Teile Dibutylzinndilaurat wurden in 126 Teilen Aceton bei 40 °C verrührt und bei 60 °C unter Rühren bis zu einem NCO-Gehalt von 1,4 Gew.-% umgesetzt. Anschließend erfolgte die Neutralisation durch Zugabe und Unterrühren von 12,1 Teilen Triethylamin. Die klare Lösung wurde unter Rühren in 850 Teile Wasser eingetragen. Daraufhin wurde eine Mischung aus 8,1 Teilen Ethylendiamin, Komponente G, und 24 Teilen Wasser der Dispersion unter Rühren zugesetzt. Im Anschluss wurde das Aceton unter leichtem Vakuum aus der Dispersion abdestilliert. Man erhielt eine erfindungsgemäße, UV-härtbare, wässrige Polyurethan-Dispersion 6) mit einem Feststoffgehalt von 42 Gew.-%, einer mittleren Teilchengröße von 88 nm und einem pH-Wert von 8,1.

### Beispiel 7:

### Herstellung einer erfindungsgemäßen, UV-härtbaren, wässrigen Polyurethan-Dispersion

157 Teile des Polyesteracrylats Agisyn^{®} 720 (AGI Co., Taipei, Taiwan) mit einer OH-Zahl von 116 mg KOH/g Substanz, Komponente A, 60,2 Teile des Polyesters aus Beispiel 3), Komponente C, 15,6 Teile 1,4-Butandiol, Komponente D, 20,1 Teile Dimethylolpropionsäure, Komponente E, 50,4 Teile Hexamethylendiisocyanat, Komponente F, 102,2 Teile Isophorondiisocyanat, Komponente F, und 0,6 Teile Dibutylzinndilaurat wurden in 126 Teilen Aceton bei 40 °C verrührt und bei 60 °C unter Rühren bis zu einem NCO-Gehalt von 1,9 Gew.-% umgesetzt. Anschließend erfolgte die Neutralisation durch Zugabe und Unterrühren von 12,1 Teilen Triethylamin. Die klare Lösung wurde unter Rühren in 590 Teile Wasser eingetragen. Daraufhin wurde eine Mischung aus 6,9 Teilen Ethylendiamin, Komponente G, und 24 Teilen Wasser der Dispersion unter Rühren zugesetzt. Im Anschluss wurde das Aceton unter leichtem Vakuum aus der Dispersion abdestilliert. Man erhielt eine erfindungsgemäße, UV-härtbare, wässrige Polyurethan-Dispersion 7) mit einem Feststoffgehalt von 41 Gew.-%, einer mittleren Teilchengröße von 65 nm und einem pH-Wert von 8,1.

### Beispiel 8:

### Herstellung einer erfindungsgemäßen, UV-härtbaren, wässrigen Polyurethan-Dispersion

156 Teile des Polyesteracrylats Laromer^{®} 8800 (BASF SE, Ludwigshafen, DE) mit einer OH-Zahl von 70 mg KOH/g Substanz, Komponente A, 29,6 Teile des Polyesters aus Beispiel 1), Komponente C, 7,0 Teile Neopentylglykol, Komponente D, 18,2 Teile Dimethylolpropionsäure, Komponente E, 34,7 Teile Hexamethylendiisocyanat, Komponente F, 69,5 Teile Isophorondiisocyanat, Komponente F, und 0,15 Teile Dibutylzinndilaurat wurden in 66 Teilen Aceton bei 40 °C verrührt und bei 60 °C unter Rühren bis zu einem NCO-Gehalt von 2,0 Gew.-% umgesetzt. Anschließend erfolgte die Neutralisation durch Zugabe und Unterrühren von 10,8 Teilen Triethylamin und die Zugabe von 111 Teilen des Ditrimethylolpropantetraacrylats Ebecryl^{®} 140 (Cytec Surface Specialties SA/NV, Drogenbos, Belgien), Komponente ii. Die klare Lösung wurde unter Rühren in 605 Teile Wasser eingetragen. Daraufhin wurde eine Mischung aus 6,1 Teilen Ethylendiamin, Komponente G, und 33 Teilen Wasser der Dispersion unter Rühren zugesetzt. Im Anschluss wurde das Aceton unter leichtem Vakuum aus der Dispersion abdestilliert. Man erhielt eine erfindungsgemäße, UV-härtbare, wässrige Polyurethan-Dispersion 8) mit einem Feststoffgehalt von 41 Gew.-%, einer mittleren Teilchengröße von 81 nm und einem pH-Wert von 8,0.

### Beispiel 9:

### Herstellung einer erfindungsgemäßen, UV-härtbaren, wässrigen Polyurethan-Dispersion

1683 Teile des Polyesteracrylats Laromer^{®} PE 44 F (BASF SE, Ludwigshafen, DE) mit einer OH-Zahl von 80 mg KOH/g Substanz, Komponente A, 89,4 Teile Pentaerythrittriacrylat, Komponente B, 2611 Teile einer 80%igen acetonischen Lösung des Polyesters aus Beispiel 2), Komponente C, 188 Teile Dimethylolpropionsäure, Komponente E, 957 Teile Toluol-2,4-diisocyanat, Komponente F, und 1,0 Teile Dibutylzinndilaurat wurden in 1621 Teilen Aceton bei 40 °C verrührt und bei 60 °C unter Rühren bis zu einem NCO-Gehalt von 1,3 Gew.-% umgesetzt. Es folgte die Neutralisation durch Unterrühren von 142 Teilen Triethylamin und nach Verdünnung mit weiteren 1236 Teilen Aceton die Zugabe von 67,6 Teilen Ethylendiamin. Zu der klaren Lösung wurden unter Rühren 6500 Teile Wasser zugegeben. Im Anschluss wurde das Aceton unter leichtem Vakuum aus der Dispersion abdestilliert. Man erhielt eine erfindungsgemäße, UV-härtbare, wässrige Polyurethan-Dispersion 9) mit einem Feststoffgehalt von 41 Gew.-%, einer mittleren Teilchengröße von 94 nm und einem pH-Wert von 8,3.

### Beispiel 10:

### Herstellung einer erfindungsgemäßen, UV-härtbaren, wässrigen Polyurethan-Dispersion

157 Teile des Polyesteracrylats Agisyn^{®} 720 (AGI Co., Taipei, Taiwan) mit einer OH-Zahl von 116 mg KOH/g Substanz, Komponente A, 257 Teile einer 80%igen acetonischen Lösung des Polyesters aus Beispiel 2), Komponente C, 15,6 Teile 1,4-Butandiol, Komponente D, 20,1 Teile Dimethylolpropionsäure, Komponente E, 50,4 Teile Hexamethylendiisocyanat, Komponente F, 102,2 Teile Isophorondiisocyanat, Komponente F, und 0,6 Teile Dibutylzinndilaurat wurden in 126 Teilen Aceton bei 40 °C verrührt und bei 60 °C unter Rühren bis zu einem NCO-Gehalt von 0,1 Gew.-% umgesetzt. Anschließend erfolgte die Neutralisation durch Zugabe und Unterrühren von 12,1 Teilen Triethylamin. Die klare Lösung wurde unter Rühren in 850 Teile Wasser eingetragen. Im Anschluss wurde das Aceton unter leichtem Vakuum aus der Dispersion abdestilliert. Man erhielt eine erfindungsgemäße, UV-härtbare, wässrige Polyurethan-Dispersion 10) mit einem Feststoffgehalt von 41 Gew.-%, einer mittleren Teilchengröße von 90 nm und einem pH-Wert von 8,0.

### Beispiel 11:

### Herstellung einer nicht erfindungsgemäßen, UV-härtbaren, wässrigen Polyurethan-Dispersion

157 Teile des Polyesteracrylats Agisyn^{®} 720 (AGI Co., Taipei, Taiwan) mit einer OH-Zahl von 116 mg KOH/g Substanz, Komponente A, 88,5 Teile des Polyesters aus Beispiel 4), Komponente C, 15,6 Teile 1,4-Butandiol, Komponente D, 20,1 Teile Dimethylolpropionsäure, Komponente E, 50,4 Teile Hexamethylendiisocyanat, Komponente F, 102,2 Teile Isophorondiisocyanat, Komponente F, und 0,6 Teile Dibutylzinndilaurat wurden in 126 Teilen Aceton bei 40 °C verrührt und bei 60 °C unter Rühren bis zu einem NCO-Gehalt von 1,9 Gew.-% umgesetzt. Anschließend erfolgte die Neutralisation durch Zugabe und Unterrühren von 12,1 Teilen Triethylamin. Die klare Lösung wurde unter Rühren in 630 Teile Wasser eingetragen. Daraufhin wurde eine Mischung aus 7,2 Teilen Ethylendiamin, Komponente G, und 24 Teilen Wasser der Dispersion unter Rühren zugesetzt. Im Anschluss wurde das Aceton unter leichtem Vakuum aus der Dispersion abdestilliert. Man erhielt eine nicht erfindungsgemäße, UV-härtbare, wässrige Polyurethan-Dispersion 11) mit einem Feststoffgehalt von 41 Gew.-%, einer mittleren Teilchengröße von 86 nm und einem pH-Wert von 8,3.

### Beispiel 12:

### Herstellung des Polyesteracrylats A1) gemäß Beispiel 1 in EP-B 872 502

224,9 Teile Hexandiol-1,6, 96,6 Teile Trimethylolpropan, 146,0 Teile Adipinsäure, 144,3 Teile Acrylsäure, 3,1 Teile p-Toluolsulfonsäure, 1,7 Teile Hydrochinonmonomethylether, 0,6 Teile 2,6-Di-tert.-Butylkresol und 250 Teile n-Heptan setzte man 10 Stunden bei 96 °C unter Rühren, Rückflusskochen und Wasserabscheiden um. Anschließend wurde das Lösungsmittel abdestilliert Die OH-Zahl betrug 165 mg KOH/g, die Säurezahl 1,0 mg KOH/g und die dynamische Viskosität 520 mPas, gemessen nach DIN 53018 bei 23 °C.

### Beispiel 13:

### Herstellung des Additionsproduktes f1) gemäß Beispiel 1 in EP-B 872 502

In einem mit Rührer, Thermometer, Tropftrichter, Rückflusskühler und regelbarer Heizung versehenen Reaktionsgefäß wurden 55,0 Teile 2-Hydroxyethylacrylat und 0,06 Teile Dibutylzinnoxid vorgelegt. Unter intensivem Durchleiten von Luft wurde auf 110 °C erhitzt, und es wurden innerhalb von 1 Stunde 45,94 Teile ε-Caprolacton über den Tropftrichter hinzu dosiert. Es wurde noch 3 Stunden unter Rühren auf 110 °C erhitzt, bis eine Viskosität im Bereich von 66-70 sec bei 23 °C (DIN EN ISO 2431) erreicht war.

### Beispiel 14:

### Herstellung einer wässrigen, UV-härtbaren Polyurethan-Dispersion gemäß Beispiel 1 in EP-B 872 502

Zu einem Gemisch aus 200 Teilen des Polyesteracrylats aus Beispiel 12), 68,4 Teilen des Additionsproduktes aus Beispiel 13), 36,0 Teilen Dimethylolpropionsäure und 23,9 Teilen Triethylamin wurden 214,0 Teilen 1-Isocyanato-3,3,5-trimethyl-5-isocyanatomethylcyclohexan unter Rühren bei Temperaturen von 55 bis 70 °C innerhalb von 3 Stunden zugetropft. Während der Nachreaktion bei der Temperatur von 75 bis 80 °C fiel der NCO-Gehalt auf den konstanten Wert von 2,2 Gew.-%. Anschließend dispergierte man das erhaltene Präpolymer unter starkem Rühren in 749,4 Teilen Wasser bei einer Temperatur von 38 bis 42 °C. Danach wurde die erhaltene Dispersion mit einem Gemisch aus 9,6 Teilen Ethylendiamin und 14,3 Teilen Wasser innerhalb von 15 min. bei gleicher Temperatur tropfenweise versetzt. Anschließend wurde noch so lange nachgerührt, bis IRspektroskopisch kein Isocyanat bei 2270 cm⁻¹ mehr nachweisbar war. Es wurde eine UV-härtbare, wässrige Polyurethan-Dispersion 14) gemäß Beispiel 1 in EP-B 872 502 mit einem Feststoffgehalt von 40 Gew.-%, einer mittleren Teilchengröße von 99 nm und einem pH-Wert von 7,6 erhalten.

### Beispiel 15:

### Herstellung einer wässrigen, UV-härtbaren Polyurethan-Dispersion gemäß Beispiel 5 in EP-B 942 022

41,3 Teile des Polyesteracrylats auf Basis Adipinsäure AgiSyn^{®} 720 (AGI Co., Taipei, Taiwan), 90,1 Teile des Polyepoxyacrylats AgiSyn^{®} 1010 (AGI Co., Taipei, Taiwan), 17,1 Teile Dimethylolpropionsäure, 33,6 Teile Hexamethylendiisocyanat, 44,4 Teile 1-Isocyanato-3,3,5-trimethyl-5-isocyanatomethylcyclohexan und 0,24 Teile Dibutylzinndilaurat wurden in 131 Teilen Aceton gelöst und bis zu einem NCO-Gehalt von 1,60 Gew.-% bei 60 °C unter Rühren umgesetzt. Anschließend erfolgte die Neutralisation durch Zugabe und Unterrühren von 12,7 Teilen Triethylamin. Die klare Lösung wurde unter Rühren in 500 Teile Wasser eingetragen. Daraufhin wurde eine Mischung aus 3,6 Teilen Ethylendiamin und 30 Teilen Wasser der Dispersion unter Rühren zugesetzt. Im Anschluss wurde das Aceton unter leichtem Vakuum aus der Dispersion abdestilliert. Man erhielt eine UV-härtbare, wässrige Polyurethan-Dispersion 15) gemäß Beispiel 5 in EP-B 942 022 mit einem Feststoffgehalt von 32,8 Gew.-%, einer mittleren Teilchengröße von 90 nm und einem pH-Wert von 8,4.

### Beispiel 16:

### Herstellung einer wässrigen, UV-härtbaren Polyurethan-Dispersion gemäß Beispiel 2 in EP-B 753 531

150,2 Teile des Polyesteracrylats Laromer^{®} 8800 (BASF AG, Ludwigshafen, DE), 15,0 Teile Dimethylolpropionsäure, 24,0 Teile Hexamethylendiisocyanat, 31,7 Teile 1-Isocyanato-3,3,5-trimethyl-5-isocyanatomethylcyclohexan und 0,22 Teile Dibutylzinndilaurat wurden in 129 Teilen Aceton gelöst und bis zu einem NCO-Gehalt von 2,20 Gew.-% bei 60 °C unter Rühren umgesetzt. Anschließend erfolgte die Neutralisation durch Zugabe und Unterrühren von 11,2 Teilen Triethylamin. Die klare Lösung wurde unter Rühren in 515 Teilen Wasser eingetragen. Daraufhin wurde eine Mischung aus 3,6 Teilen Ethylendiamin und 30,0 Teilen Wasser der Dispersion unter Rühren zugesetzt. Im Anschluss wurde das Aceton unter leichtem Vakuum aus der Dispersion abdestilliert. Man erhielt eine UV-härtbare, wässrige Polyurethan-Dispersion 16) gemäß Beispiel 2 in EP-B 753 531 mit einem Feststoffgehalt von 29,0 Gew.-%, einer mittleren Teilchengröße von 180 nm und einem pH-Wert von 7,7.

**Tabelle 1: Formulierungen für pigmentierte Systeme**

| | **Pigmentierte Lacke [A-1] und [A-2] (Gewichtsteile)** | **Klarlack [A-3] (Gewichtsteile)** |
|---|---|---|
| **UV-Dispersion (angepasst auf 40% Festkörper)** | 122,00 | 150 |
| **Butylglykol / Wasser (1:1)** | 10,00 | 12 |
| **Silikonoberflächenadditiv BYK**^{®} **373¹** | 0,20 | - |
| **Benetzungsmittel BYK**^{®} **346²** | 0,40 | 0,3 |
| **Irgacure**^{®} **500³** | 2,00 | 1,5 |
| **Irgacure**^{®} **819 DW⁴** | 2,00 | - |
| **Entschäumer Dehydran 1293⁵** | 1,00 | |
| **TiO₂-Paste Apuis 0062⁶** | 49,00 | - |
| **Verdickungsmittel BYK**^{®} **425⁷** | 2,00 | 0,4 |
| **Wasser** | 11,40 | - |
| **Gesamt** | 200,00 | 164,2 |

**Tabelle 2: Applikations- und Härtungsbedingungen für pigmentierte Systeme**

| | **Pigmentierte Lacke [A-1]** | **Pigmentierte Lacke [A-2]** | **Klarlack [A-3]** |
|---|---|---|---|
| **Substrat** | Holz | Glas | Glas |
| **Auftrag durch Rakeln** | Kastenrakel, 2 x 150 µm Nassfilm | Kastenrakel, 1 x 150 µm, Nassfilm | Kastenrakel, 1 x 150 µm, Nassfilm |
| **Entlüftungszeit** | 10 min, 50 °C | 10 min, 50 °C | 10 min, 50 °C |
| **Härtung** | 3 m/min (Ga + Hg)⁸ | 3, 5 m/min⁹ (Ga + Hg)⁸ | 3, m/min⁹ (Hg)⁸ |
| ¹ Lösung eines polyethermodifizierten, hydroxyfunktionellen Polydimethylsiloxans der Fa. BYK, Wesel, DE | | | |
| ² Lösung eines polyethermodifizierten Polydimethylsiloxans der Fa. BYK, Wesel, DE | | | |
| ³ eine Mischung von Benzophenon und (1-Hydroxycyclohexyl)phenylketon der Fa. Ciba, Lampertheim, DE | | | |
| ⁴ Phenylbis-(2,4,6-trimethylbenzoyl)-phosphinoxid der Fa. Ciba, Lampertheim, DE | | | |
| ⁵ Modifiziertes Polydimethylsiloxan der Fa. Cognis, Düsseldorf, DE | | | |
| ⁶ Pigmentpaste der Fa. Heubach, Langelsheim, DE | | | |
| ⁷ Lösung eines harnstoffmodifizierten Polyurethans der Fa. BYK, Wesel, DE | | | |
| ⁸ UV-Anlage der Fa. Barberán, Model HOK - 6/2 (ca. 80 W/cm) | | | |
| ⁹ Zum Test der Reaktivität wird die nach der Aushärtung erzielte Härte in Pendelsekunden (nach DIN 53157) in Abhängigkeit von verschiedenen Bandlaufgeschwindigkeiten gemessen. Bleibt die Pendelhärte auch bei höchster Bandgeschwindigkeit bei Werten über 100 Pendelsekunden, so besitzt die Beschichtung eine ausgezeichnete Reaktivität. | | | |

Nach der UV-Härtung werden die beschichteten Substrate gelagert (Holz 1 d bei 50 °C bzw. Glas 1 h bei Raumtemperatur im Exikator) und anschließend den Prüfungen unterzogen.

**Tabelle 3: Daten zur anwendungstechnischen Prüfung pigmentierter Systeme**

| **Anwendungstechnische Prüfung** | **Beispiel 5** | **Beispiel 14 (**EP-B872 502**)** | **Beispiel 15 (**EP-B942 022**)** | **Beispiel 16 (**EP-B753 531**)** |
|---|---|---|---|---|
| **Filmtransparenz**¹⁰**, Klarlack [A-3]** | 4 | 5 | 2 | 4 |
| **Lagerstabilität: 50 °C/24 h** | OK | OK | OK | OK |
| **Lagerstabilität: 40 °C/28 d** | OK | OK | OK | OK |
| **Wasserfestigkeit¹¹, pigmentierter Lack [A-1]** | 5 | 5 | 5 | 5 |
| **Kaffeebeständigkeit**¹¹**, pigmentier- ter Lack [A-1]** | 4 | 2-3 | 2-3 | 2-3 |
| **Ethanol/Wasser (50%)-Beständigkeit,**¹¹ **pigmentierter Lack [A-1]** | 4 | 3-4 | 4 | 2 |
| **Rotweinbeständigkeit**¹¹**, pigmen- tierter Lack [A-1]** | 4 | 3 | 3 | 3 |
| **Ethanolbeständigkeit (98%)**¹¹**, pig-mentierter Lack [A-1]** | 4 | 3 | 3 | 2 |
| **Pendelhärte nach König, Klarlack [A-3] nach phk. Trocknung** | 30 sec | 14 sec | 14 sec | 10 sec |
| **Pendelhärte nach König, Klarlack** | 161 sec, | 94 sec, | 182 sec, | 130 sec, |
| **[A-3] nach UV-Härtung** | 160 sec | 77 sec | 178 sec | 116 sec |
| **Pendelhärte nach König, pigmentierter Lack [A-2]** | 139 sec, | 55 sec, | 119 sec, | 108 sec, |
| | 125 sec | 46 sec | 104 sec | 87 sec |
| **Weissanlaufen nach Verkratzen,**¹² **Klarlack [A-3]** | 5 | 5 | 4 | 5 |
| ¹⁰ Die Filmtransparenz wird durch Aufziehen eines Filmes auf einer Glasplatte und anschließender physikalischer Trocknung visuell beurteilt: | | | | |
| Note 5: klar, keine Trübung oder Schleierbildung erkennbar | | | | |
| Note 4: bei einem Betrachtungswinkel von ca. 10-20 ° ist eine leichte Schleierbildung erkennbar | | | | |
| Note 3: bei einem Betrachtungswinkel von ca. 45-80° ist eine leichte Trübung erkennbar | | | | |
| Note 2: deutliche Trübung | | | | |
| Note 1: matte Oberfläche bzw. griesige Oberfläche | | | | |
| ¹¹ Die Beständigkeitseigenschaften werden nach 16 Stunden Belastung durch optische Inaugenscheinnahme beurteilt: | | | | |
| Note 5: Keine sichtbaren Veränderungen (keine Beschädigung). | | | | |
| Note 4: Leichte Glanz- oder Farbtonveränderung, nur sichtbar, wenn sich die Lichtquelle in der Prüfoberfläche auf oder dicht neben der Markierung spiegelt und direkt zum Auge des Betrachters reflektiert wird, oder einige eben erkennbare, abgegrenzte Markierungen (Quellungsring erkennbar, bzw. keine Erweichung mit dem Fingernagel erkennbar). | | | | |
| Note 3: Leichte Markierung aus mehreren Blickwinkeln zu sehen, zum Beispiel ein eben erkennbarer fast völliger Kreis oder Kreisfläche (Quellungsring erkennbar, Kratzspuren des Fingernagels erkennbar) | | | | |
| Note 2: Starke Markierung, die Oberflächenstruktur ist jedoch weitgehend unverändert. (geschlossener Quellungsring, Kratzspuren feststellbar). | | | | |
| Note 1: Starke Markierung, die Oberflächenstruktur ist jedoch weitgehend unverändert, Markierung ist bis zum Untergrund durchkratzbar | | | | |
| Note 0: Starke Markierung, die Oberflächenstruktur ist verändert oder das Oberflächenmaterial ist ganz oder teilweise zerstört oder das Filterpapier haftet an der Oberfläche. | | | | |
| ¹² Das Weissanlaufen nach Verkratzung wird durch Verkratzen mittels einer Münze geprüft. Ist an der Verkratzungsstelle keinerlei Weissanlaufen erkennbar, dann wird dieses Ergebnis als exzellent beurteilt (Note 5). | | | | |

**Tabelle 4: Formulierungen für Klarlack-Systeme**

| | **Klarlack [A-4, A-5] (Gewichtsteile)** |
|---|---|
| **UV-Dispersion (angepasst auf 40% Festkörper)** | 150 |
| **Butylglykol / Wasser (1:1)** | 12 |
| **Irgacure^{®} 500³** | 1,5 |
| **Benetzungsmittel BYK^{®} 346²** | 0,3 |
| **Verdickungsmittel BYK^{®} 425⁷** | 0,4 |
| **Gesamt** | 164,2 |

**Tabelle 5: Applikations- und Härtungsbedingungen für Klarlack-Systeme**

| | **Klarlack [A-4]** | **Klarlack [A-5]** |
|---|---|---|
| **Substrat** | Holz | Glas |
| **Auftrag durch Rakeln** | Kastenrakel, 1 x 150 µm, Nassfilm | Kastenrakel, 1 x 150 µm, Nassfilm |
| **Entlüftungszeit** | 10 min, 50 °C | 10 min, 50 °C |
| **Härtung** | 3, 5 m/min⁹ (Hg)⁸ | 3, 5 m/min⁹ (Hg)⁸ |

Nach der UV-Härtung werden die beschichteten Substrate gelagert (Glas 1 h bei Raumtemperatur im Exikator) und anschließend den Prüfungen unterzogen.

**Tabelle 6: Daten zur anwendungstechnischen Prüfung von Klarlacksystemen**

| **Anwendungstechnische Prüfung** | **Beispiel 5** | **Beispiel 6** | **Beispiel 7** | **Beispiel 8** | **Beispiel 9** | **Beispiel 11** | **Beispiel 14 (**EP-B872 502**)** | **Beispiel 15 (**EP-B942 022**)** | **Beispiel 16 (**EP-B753 531**)** |
|---|---|---|---|---|---|---|---|---|---|
| **Filmtransparenz¹⁰, Klarlack [A-5]** | **5** | **5** | **5** | **5** | **5** | **5** | **5** | **5** | **2** |
| Lagerstabilität: 50 °C/24 h | OK | OK | OK | OK | OK | OK | OK | OK | OK |
| Lagerstebilität: 40 °C/28 d | OK | OK | OK | OK | OK | OK | OK | OK | OK |
| Wasserfestigkeit¹¹, Klarlack [A-4] | 5 | 5 | 5 | 5 | 5 | 5 | 5 | 5 | 5 |
| Kaffeebeständigkeit¹¹, Klarlack [A-4] | 5 | 5 | 5 | 5 | 5 | 5 | 5 | 5 | 5 |
| Ethanol/wasser (50%)-Beständigkeit,¹¹ Klarlack [A-4] | 5 | 5 | 5 | 5 | 5 | 4 | 4 | 4 | 5 |
| Rotweinbeständigkeit¹¹, Klarlack [A-4] | 5 | 5 | 4-5 | 5 | 5 | 5 | 5 | 5 | 5 |
| Ethanolbeständigkeit (98%)¹¹, Klarlack [A- 4] | 4-5 | 4 | 4 | 5 | 5 | 3 | 3 | 3 | 3 |
| Pendelhärte nach König, Klarlack [A-5] Pendelhärte nach König, [A-5] | 29 sec | 20 sec | 13 sec | 19 sec | 41 sec | klebrig | 14 sec | 14 sec | 10 sec |
| Pendelhärte nach König, Klarlack [A-5] nach UV-Härtung | 164 sec, 158 sec | 144 sec, 102 sec | 152 sec, 112 sec | 181 sec, 169 sec | 143 sec, 125 sec | 129 sec, 88 sec | 94 sec, 77 sec | 182 sec, 178 sec | 130 sec, 116 sec |
| Weissanlaufen nach Verkratzen,¹² Klarlack [A-5] | 5 | 5 | 5 | 5 | 5 | 5 | 5 | 4 | 5 |

In der pigmentierten Formulierung zeigt das erfindungsgemäße Beispiel 5) im Vergleich zu den Vergleichsbeispielen 14), 15) und 16) deutlich bessere Fleckenbeständigkeiten gegen Kaffee und Rotwein sowie eine bessere Beständigkeit gegen Ethanol. Zudem wird für Beispiele 5) eine sehr ausgeprägte physikalische Antrocknung und hohe Pendelhärten nach Strahlenhärtung erreicht.

In der Klarlack-Formulierung sind die Beispiele 5) bis 9) den Vergleichsbeispielen 14) bis 16) in den Beständigkeiten gegen Ethanol überlegen. Es werden tendenziell sowohl nach physikalischer Trocknung als auch nach Strahlenhärtung höhere Pendelhärten erreicht, ohne dass beim Weisssanlaufen nach Verkratzung schlechtere Werte erhalten werden. In Vergleichsbeispiel 15) sieht man anhand des etwas schlechteren Wertes für Weissanlaufen nach Verkratzen, dass die hohe Pendelhärte nach Strahlenhärtung, insbesondere hervorgerufen durch den hohen Gehalt an Polyepoxyacrylat, zu einer gewissen Versprödung des Films führt. Das nicht erfindungsgemäße Beispiel 11 zeigt deutlich den weich machenden Effekt des Adipinsäure-haltigen Polyesters nach physikalischer Trocknung und nach Strahlenhärtung.

## Patentansprüche

1. Strahlenhärtbare, wässrige Dispersionen auf Basis von Polyurethanacrylaten (i) enthaltend als Aufbaukomponenten
A) eine oder mehrere oligomere oder polymere Verbindungen mit mindestens einer gegenüber Isocyanat reaktiven Gruppe und mindestens einer radikalisch copolymerisierbaren Gruppe, wobei es sich um hydroxylgruppenhaltige Polyester(meth)acrylate mit einer OH-Zahl im Bereich von 15 bis 300 mg KOH/g Substanz handelt,
B) gegebenenfalls eine oder mehrere von A verschiedene, monomere Verbindungen, mit einer Hydroxyfunktion und mindestens einer (Meth)acrylatgruppe,
C) Polyesterpolyole, bestehend aus
C1) aliphatischen Diolen mit 2 bis 4 Kohlenstoffatomen zwischen den beiden OH-Funktionen und / oder aliphatischen Triolen und
C2) aromatischen Di- und / oder Tricarbonsäuren,
D) gegebenenfalls von A bis C verschiedene Polyole,
E) eine oder mehrere Verbindungen mit mindestens einer gegenüber Isocyanat reaktiven Gruppe und zusätzlich nichtionische, ionische oder zur Ausbildung von ionischen Gruppen befähigte Gruppen, die für die Polyurethandispersion dispergierend wirken,
F) organische Polyisocyanate,
G) gegebenenfalls von A bis E verschiedene Verbindungen mit mindestens einer gegenüber Isocyanat reaktiven Gruppe.

2. Strahlenhärtbare, wässrige Dispersionen auf Basis von Polyurethanacrylaten (i) gemäß Anspruch 1, enthaltend zusätzlich eine Komponente ii, wobei es sich um Reaktivverdünner, die mindestens eine radikalisch polymerisierbare Gruppe aufweisen, handelt.

3. Strahlenhärtbare, wässrige Dispersionen auf Basis von Polyurethanacrylaten gemäß Anspruch 1 oder 2, **dadurch gekennzeichnet, dass** Aufbaukomponente C zu 5 bis 75 Gew.-% eingesetzt wird, wobei sich die Komponenten A bis G zu 100 Gew.-% addieren.

4. Strahlenhärtbare, wässrige Dispersionen auf Basis von Polyurethanacrylaten gemäß einem der Ansprüche 1 bis 3, **dadurch gekennzeichnet, dass** Aufbaukomponente C eine OH-Zahl von 20 bis 500 mg KOH/g Substanz aufweist.

5. Strahlenhärtbare, wässrige Dispersionen auf Basis von Polyurethanacrylaten gemäß einem der Ansprüche 1 bis 4, **dadurch gekennzeichnet, dass** als Komponente C1 1,2-Ethandiol, 1,2-Propandiol, 1,3-Propandiol, Neopentylglykol, 2-Ethyl-2-butylpropandiol, 1,3-Butandiol, 1,2- und 1,4-Cyclohexandiol, 1,4-Butandiol, Trimethylolethan, Trimethylolpropan, Trimethylolbutan, Glycerin und / oder Rizinusöl und als Komponente C2 Phthalsäure, Phthalsäureanhydrid, Isophthalsäure, Terephthalsäure, Trimellithsäure, die Anhydride der genannten Säuren und / oder Gemische der genannten Verbindungen eingesetzt werden.

6. Strahlenhärtbare, wässrige Dispersionen auf Basis von Polyurethanacrylaten gemäß einem der Ansprüche 1 bis 5, **dadurch gekennzeichnet, dass** als Komponente C1 1,2-Ethandiol, 1,2-Propandiol, Neopentylglykol und / oder Trimethylolpropan und als Komponente C2 Isophthalsäure und / oder Terephthalsäure eingesetzt werden.

7. Strahlenhärtbare, wässrige Dispersionen auf Basis von Polyurethanacrylaten gemäß einem der Ansprüche 1 bis 6, **dadurch gekennzeichnet, dass** als Komponente E 2-(2-Amino-ethylamino-)ethansulfonsäure, 3-(Cyclohexylamino)propan-1-sulfonsäure, das Additionsprodukt von Isophorondiamin und Acrylsäure (EP 916 647 A1, Beispiel 1), Hydroxypivalinsäure, Dimethylolpropionsäure, Triethanolamin, Tripropanolamin, N-Methyldiethanolamin, N,N-Dimethylethanolamin, monofunktionelle gemischte Polyalkylenoxidpolyether, die ≥ 40 mol-% Ethylenoxid- und ≤ 60 mol-% Propylenoxideinheiten aufweisen und / oder Gemische der genannten Verbindungen eingesetzt werden.

8. Strahlenhärtbare, wässrige Dispersionen auf Basis von Polyurethanacrylaten gemäß einem der Ansprüche 1 bis 7, **dadurch gekennzeichnet, dass** als Komponente F 1,6-Hexamethylendiisocyanat, 1-Isocyanato-3,3,5-trimethyl-5-isocyanatomethylcyclohexan (Isophorondiisocyanat oder IPDI), 4,4'-Diisocyanato-dicyclohexylmethan, deren Mischungen untereinander, Homologe bzw. Oligomere von 1-Isocyanato-3,3,5-trimethyl-5-isocyanatomethylcyclohexan (Isophorondiisocyanat oder IPDI) und 4,4'-Diisocyanato-dicyclohexylmethan mit Biuret-, Carbodiimid-, Isocyanurat-, Allophanat-, Iminooxadiazindion- und / oder Uretdiongruppen, Mischungen dieser Homologen bzw. Oligomeren untereinander, oder Mischungen dieser Homologen bzw. Oligomeren mit den zuvor aufgeführten Polyisocyanaten eingesetzt werden.

9. Verfahren zur Herstellung der strahlenhärtbaren, wässrigen Dispersionen auf Basis von Polyurethanacrylaten (i) gemäß einem der Ansprüche 1 bis 8, **dadurch gekennzeichnet, dass** durch Umsetzen der Komponenten A-E in einem oder mehreren Reaktionsschritten mit Komponente F ein Polyurethanacrylatprepolymer (i) erhalten wird, wobei ein Neutralisationsmittel zur Erzeugung der für die Dispergierung notwendigen ionischen Gruppen vor, während oder nach der Prepolymerherstellung zugegeben werden kann, gefolgt von einem Dispergierschritt durch Zugabe von Wasser zum Prepolymer bzw. Überführen des Prepolymers in eine wässrige Vorlage, wobei vor, während oder nach der Dispergierung eine Kettenverlängerung mittels Komponente G erfolgen kann.

10. Verfahren zur Herstellung der strahlenhärtbaren, wässrigen Dispersionen auf Basis von Polyurethanacrylaten (i) gemäß Anspruch 9, **dadurch gekennzeichnet, dass** die molaren Verhältnisse von Iscocyanatgruppen in F zu gegenüber Isocyanaten reaktiven Gruppen in A, B, C, D und E von 0,8 : 1 bis 2,5 : 1 betragen.

11. Verfahren gemäß Anspruch 9 oder 10, **dadurch gekennzeichnet, dass** als weitere Komponente ein oder mehrere Reaktivverdünner mit mindestens einer radikalisch polymerisierbaren Gruppe (Komponente ii) beigemischt werden.

12. Verwendung der strahlenhärtbaren, wässrigen Dispersionen gemäß einem der Ansprüche 1 bis 8, zur Herstellung von Beschichtungen, Lacken oder Klebstoffen.

13. Beschichtungsmittel enthaltend die erfindungsgemäßen strahlenhärtbaren, wässrigen Dispersionen gemäß einem der Ansprüche 1 bis 8, auf Polyurethanacrylatbasis, sowie Vernetzer auf Basis von Aminoharzen, blockierten Polyisocyanaten, nicht blockierten Polyisocyanaten, Polyaziridinen und / oder Polycarbodiimiden, und / oder ein oder mehrere weitere Dispersionen.

14. Substrate beschichtet mit Beschichtungsmitteln gemäß Anspruch 13.

## Claims

1. Radiation-curable, aqueous dispersions based on polyurethane acrylates (i) comprising as synthesis components
A) one or more oligomeric or polymeric compounds having at least one isocyanate-reactive group and at least one free-radically copolymerizable group, wherein said compounds are hydroxyl group-containing polyester (meth)acrylates having an OH number in the range from 15 to 300 mg KOH/g substance,
B) optionally one or more monomeric compounds different from A, having a hydroxyl function and at least one (meth)acrylate group,
C) polyester polyols, consisting of
C1) aliphatic diols having 2 to 4 carbon atoms between the two OH functions and/or aliphatic triols and
C2) aromatic dicarboxylic and/or tricarboxylic acids,
D) optionally polyols different from A to C,
E) one or more compounds having at least one isocyanate-reactive group and additionally nonionic groups, ionic groups or groups capable of forming ionic groups, these groups having a dispersing activity for the polyurethane dispersion,
F) organic polyisocyanates,
G) optionally compounds different from A to E, having at least one isocyanate-reactive group.

2. Radiation-curable, aqueous dispersions based on polyurethane acrylates (i) according to Claim 1, further comprising a component ii, which comprises reactive diluents containing at least one free-radically polymerizable group.

3. Radiation-curable, aqueous dispersions based on polyurethane acrylates according to Claim 1 or 2, **characterized in that** synthesis component C is used at 5% to 75% by weight, with components A to G adding up to 100% by weight.

4. Radiation-curable, aqueous dispersions based on polyurethane acrylates according to any of Claims 1 to 3, **characterized in that** synthesis component C has an OH number of 20 to 500 mg KOH/g substance.

5. Radiation-curable, aqueous dispersions based on polyurethane acrylates, according to any of Claims 1 to 4, **characterized in that** use is made as component C1 of 1,2-ethanediol, 1,2-propanediol, 1,3-propanediol, neopentyl glycol, 2-ethyl-2-butylpropanediol, 1,3-butanediol, 1,2-and 1,4-cyclohexanediol, 1,4-butanediol, trimethylolethane, trimethylol-propane, trimethylolbutane, glyercol and/or castor oil and use is made as component C2 of phthalic acid, phthalic anhydride, isophthalic acid, terephthalic acid, trimellitic acid, the anhydrides of the stated acids and/or mixtures of the stated compounds.

6. Radiation-curable, aqueous dispersions based on polyurethane acrylates, according to any of Claims 1 to 5, **characterized in that** use is made as component C1 of 1,2-ethanediol, 1,2-propane-diol, neopentyl glycol and/or trimethylolpropane, and use is made as component C2 of isophthalic acid and/or terephthalic acid.

7. Radiation-curable, aqueous dispersions based on polyurethane acrylates, according to any of Claims 1 to 6, **characterized in that** use is made as component E of 2-(2-aminoethylamino)ethanesulphonic acid, 3-(cyclohexylamino)propane-1-sulphonic acid, the addition product of isophoronediamine and acrylic acid (EP 916 647 A1, Example 1), hydroxypivalic acid, dimethylolpropionic acid, triethanolamine, tripropanolamine, N-methyldiethanolamine, N,N-dimethylethanolamine, monofunctional mixed polyalkylene oxide polyethers containing ≥ 40 mol% ethylene oxide units and ≤ 60 mol% of propylene oxide units, and/or mixtures of the stated compounds.

8. Radiation-curable, aqueous dispersions based on polyurethane acrylates according to any of Claims 1 to 7, **characterized in that** use is made as component F of hexamethylene 1,6-diisocyanate, 1-isocyanato-3,3,5-trimethyl-5-isocyanatomethyl-cyclohexane (isophorone diisocyanate or IPDI), 4,4'-diisocyanatodicyclohexylmethane, mixtures thereof with one another, homologues and/or oligomers of 1-isocyanato-3,3,5-trimethyl-5-iso-cyanatomethylcyclohexane (isophorone diisocyanate or IPDI) and 4,4'-diisocyanatodicyclohexylmethane with biuret, carbodiimide, isocyanurate, allophanate, iminooxadiazinedione and/or uretdione groups, mixtures of these homologues and/or oligomers with one another, or mixtures of these homologues and/or oligomers with the polyisocyanates recited above.

9. Process for preparing the radiation-curable, aqueous dispersions based on polyurethane acrylates (i) according to any of Claims 1 to 8, **characterized in that** a polyurethane acrylate prepolymer (i) is obtained by reacting components A-E in one or more reaction steps with component F, it being possible to add a neutralizing agent for generating the ionic groups necessary for dispersing, before, during or after the preparation of the prepolymer, followed by a dispersing step by adding water to the prepolymer or transferring the prepolymer to an aqueous reservoir, it being possible for chain extension to take place by means of component G before, during or after dispersing.

10. Process for preparing the radiation-curable, aqueous dispersions based on polyurethane acrylates (i) according to Claim 9, **characterized in that** the molar ratios of isocyanate groups in F to isocyanate-reactive groups in A, B, C, D and E are from 0.8 : 1 to 2.5 : 1.

11. Process according to Claim 9 or 10, **characterized in that** one or more reactive diluents having at least one free-radically polymerizable group (component ii) are admixed as a further component.

12. Use of the radiation-curable, aqueous dispersions according to any of Claims 1 to 8 for producing coatings, paints or adhesives.

13. Coating compositions comprising the inventive radiation-curable, aqueous dispersions according to any of Claims 1 to 8, based on polyurethane acrylate, and also crosslinkers based on amino resins, blocked polyisocyanates, non-blocked polyisocyanates, polyaziridines and/or polycarbodiimides, and/or one or more further dispersions.

14. Substrates coated with coating compositions according to Claim 13.

## Revendications

1. Dispersions aqueuses durcissables par rayonnement à base d'acrylates de polyuréthane (i) contenant en tant que composants constitutifs
A) un ou plusieurs composés oligomères ou polymères contenant au moins un groupe réactif avec les isocyanates et au moins un groupe copolymérisable par voie radicalaire, dans lesquelles il s'agit de (méth)acrylates de polyester contenant des groupes hydroxyle avec un indice OH dans la gamme de 15 à 300 mg KOH/g de substance,
B) éventuellement un ou plusieurs composés monomères différents de A, contenant une fonction hydroxy et au moins un groupe (méth)acrylate,
C) des polyester-polyols, consistant en
C1) des diols aliphatiques contenant 2 à 4 atomes de carbone entre les deux fonctions OH et/ou des triols aliphatiques, et
C2) des acides di- et/ou tricarboxyliques aromatiques,
D) éventuellement des polyols différents de A à C,
E) un ou plusieurs composés contenant au moins un groupe réactif avec les isocyanates et également des groupes non ioniques, ioniques ou aptes à la formation de groupes ioniques, qui ont une action dispersante pour la dispersion de polyuréthane,
F) des polyisocyanates organiques,
G) éventuellement des composés différents de A à E contenant au moins un groupe réactif avec les isocyanates.

2. Dispersions aqueuses durcissables par rayonnement à base d'acrylates de polyuréthane (i) selon la revendication 1, contenant également un composant ii, celui-ci consistant en des diluants réactifs qui comprennent au moins un groupe polymérisable par voie radicalaire.

3. Dispersions aqueuses durcissables par rayonnement à base d'acrylates de polyuréthane selon la revendication 1 ou 2, **caractérisées en ce que** le composant constitutif C est utilisé à hauteur de 5 à 75 % en poids, les composants A à G totalisant 100 % en poids.

4. Dispersions aqueuses durcissables par rayonnement à base d'acrylates de polyuréthane selon l'une quelconque des revendications 1 à 3, **caractérisées en ce que** le composant constitutif C présente un indice OH de 20 à 500 mg KOH/g de substance.

5. Dispersions aqueuses durcissables par rayonnement à base d'acrylates de polyuréthane selon l'une quelconque des revendications 1 à 4, **caractérisées en ce que** le 1,2-éthane-diol, le 1,2-propane-diol, le 1,3-propane-diol, le néopentylglycol, le 2-éthyl-2-butylpropane-diol, le 1,3-butane-diol, le 1,2- et 1,4-cyclohexane-diol, le 1,4-butane-diol, le triméthyloléthane, le triméthylolpropane, le triméthylolbutane, la glycérine et/ou l'huile de ricin sont utilisés en tant que composant C1 et l'acide phtalique, l'anhydride de l'acide phtalique, l'acide isophtalique, l'acide téréphtalique, l'acide triméllitique, les anhydrides des acides mentionnés et/ou des mélanges des composés mentionnés sont utilisés en tant que composant C2.

6. Dispersions aqueuses durcissables par rayonnement à base d'acrylates de polyuréthane selon l'une quelconque des revendications 1 à 5, **caractérisées en ce que** le 1,2-éthane-diol, le 1,2-propane-diol, le néopentylglycol et/ou le triméthylolpropane sont utilisés en tant que composant C1 et l'acide isophtalique et/ou l'acide téréphtalique sont utilisés en tant que composant C2.

7. Dispersions aqueuses durcissables par rayonnement à base d'acrylates de polyuréthane selon l'une quelconque des revendications 1 à 6, **caractérisées en ce que** l'acide 2-(2-aminoéthylamino)éthane-sulfonique, l'acide 3-(cyclohexylamino)propane-1-sulfonique, le produit d'addition d'isophorone-diamine et d'acide acrylique (EP 916 647 A1, exemple 1), l'acide hydroxypivalique, l'acide diméthylolpropionique, la triéthanolamine, la tripropanolamine, la N-méthyldiéthanolamine, la N,N-diméthyléthanolamine, les polyéthers d'oxydes de polyalkylène monofonctionnels mixtes qui comprennent ≥ 40 % en moles d'unités oxyde d'éthylène et ≤ 60 % en moles d'unités oxyde de propylène et/ou des mélanges des composés mentionnés sont utilisés en tant que composant E.

8. Dispersions aqueuses durcissables par rayonnement à base d'acrylates de polyuréthane selon l'une quelconque des revendications 1 à 7, **caractérisées en ce que** le diisocyanate de 1,6-hexaméthylène, le 1-isocyanato-3,3,5-triméthyl-5-isocyanatométhylcyclohexane (diisocyanate d'isophorone ou IPDI), le 4,4'-diisocyanato-dicyclohexylméthane, leurs mélanges les uns avec les autres, les homologues ou oligomères de 1-isocyanato-3,3,5-triméthyl-5-isocyanatométhylcyclohexane (diisocyanate d'isophorone ou IPDI) et de 4,4'-diisocyanato-dicyclohexylméthane contenant des groupes biuret, carbodiimide, isocyanurate, allophanate, iminooxadiazine-dione et/ou uretdione, des mélanges de ces homologues ou oligomères les uns avec les autres, ou des mélanges de ces homologues ou oligomères avec les polyisocyanates listés précédemment sont utilisés en tant que composant F.

9. Procédé de fabrication de dispersions aqueuses durcissables par rayonnement à base d'acrylates de polyuréthane (i) selon l'une quelconque des revendications 1 à 8, **caractérisé en ce qu'**un prépolymère d'acrylate de polyuréthane (i) est obtenu par mise en réaction des composants A à E dans une ou plusieurs étapes de réaction avec le composant F, un agent de neutralisation pouvant être ajouté avant, pendant ou après la fabrication du prépolymère pour former les groupes ioniques nécessaires pour la dispersion, suivie par une étape de dispersion par ajout d'eau au prépolymère ou transfert du prépolymère dans une préparation aqueuse, un allongement des chaînes au moyen du composant G pouvant avoir lieu avant, pendant ou après la dispersion.

10. Procédé de fabrication des dispersions aqueuses durcissables par rayonnement à base d'acrylates de polyuréthane (i) selon la revendication 9, **caractérisé en ce que** les rapports molaires entre les groupes isocyanate dans F et les groupes réactifs avec les isocyanates dans A, B, C, D et E sont de 0,8:1 à 2,5:1.

11. Procédé selon la revendication 9 ou 10, **caractérisé en ce qu'**un ou plusieurs diluants réactifs contenant au moins un groupe polymérisable par voie radicalaire (composant ii) sont incorporés en tant que composant supplémentaire.

12. Utilisation des dispersions aqueuses durcissables par rayonnement selon l'une quelconque des revendications 1 à 8 pour la fabrication de revêtements, de laques ou d'adhésifs.

13. Agent de revêtement contenant les dispersions aqueuses durcissables par rayonnement selon l'invention selon l'une quelconque des revendications 1 à 8 à base d'acrylates de polyuréthane, ainsi que des agents de réticulation à base de résines amino, de polyisocyanates bloqués, de polyisocyanates non bloqués, de polyaziridines et/ou de polycarbodiimides, et/ou une ou plusieurs dispersions supplémentaires.

14. Substrats revêtus avec des agents de revêtement selon la revendication 13.
